(19) Europäisches Patentamt
European Patent Office
Office européen des brevets

(11) EP 4 685 148 A1

(12) EUROPEAN PATENT APPLICATION
published in accordance with Art. 153(4) EPC

(43) Date of publication:
**28.01.2026 Bulletin 2026/05**

(21) Application number: **24774974.0**

(22) Date of filing: **21.03.2024**

(51) International Patent Classification (IPC):
***C07F 13/00*** *(2006.01)* ***C07C 63/49*** *(2006.01)*
***C08G 65/325*** *(2006.01)* ***C09K 5/14*** *(2006.01)*

(52) Cooperative Patent Classification (CPC):
**C07C 63/49; C07F 13/00; C08G 65/325; C09K 5/14**

(86) International application number:
**PCT/JP2024/011116**

(87) International publication number:
**WO 2024/195840 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.03.2023 JP 2023047054**
**19.09.2023 JP 2023151729**

(71) Applicant: **Japan Science and Technology Agency**
**Kawaguchi-shi, Saitama 332-0012 (JP)**

(72) Inventors:
- **FUKUSHIMA, Takanori**
**Tokyo 152-8550 (JP)**
- **FUKUI, Tomoya**
**Tokyo 152-8550 (JP)**
- **KATO, Mikiya**
**Tokyo 152-8550 (JP)**

(74) Representative: **Wächtershäuser & Hartz Patentanwaltspartnerschaft mbB**
**Weinstraße 8**
**80333 München (DE)**

# (54) MANGANESE OXIDE CLUSTER COMPOUND

(57) To provide a novel photothermal conversion material. Provided is a manganese oxide cluster compound of formula (1) wherein L is a tricarboxytriptycene residue; $\alpha^1$ is an organic acid residue; $\beta^1$ is a solvent selected from the group consisting of water and a polar organic solvent having a dielectric constant of from 6 to 47; $P^1$ is a coordination molecule selected from the group consisting of a nitrogen-containing heterocyclic compound, an oxygen-containing cyclic compound, and phosphines, or a polymer containing the coordination molecule; $\gamma^1$ is a solvent selected from the group consisting of water and a polar organic solvent having a dielectric constant of from 6 to 47; q is a number satisfying $0 \le m \le 8$; and m is a number satisfying $0 \le m \le 10$.

EP 4 685 148 A1

## Description

### Technical Field

The present invention relates to a manganese oxide cluster compound and a photoexothermic material composition containing it.

### Background Art

It is desired to create new industries in the fields of electronics and health care by generating a highly efficient use of heat through creation of thermal control technology. Solar cells converting light energy into electric energy are being put into practical use.

On the other hand, as technology of converting light energy into heat energy, photothermal conversion behavior of a single-layer carbon nanotube is known (Non Patent Literature 1). The single-layer carbon nanotube has strong absorption in the near-infrared region. Non Patent Literature 1 reports that localized heating occurs by irradiating a single-layer carbon nanotube with a near-infrared pulse laser. Furthermore, it is also reported that cancer cells are killed by heat generated by carrying out photothermal conversion by a single-layer carbon nanotube in the cancer cells.

A single-layer carbon nanotube exhibits metallic or semiconductive properties depending on the arrangement of carbon atoms. Commercially available single-layer carbon nanotubes are each composed of a mixture of metallic and semiconductive single-layer carbon nanotubes. The single-layer carbon nanotubes respectively exhibit different photothermal conversion behaviors.

### Citation List

#### Non Patent Literature

Non Patent Literature 1: Nadine Wong Shi Kam, Michael O'Connell, Jeffrey A. Wisdom, Hongjie Dai, Proc. Natl. Acad. Sci. USA 2005, 102, 11600.

### Summary of Invention

#### Technical Problem

However, a photothermal conversion functional material using the carbon nanotube has not yet been put into practical use due to economic reasons and other reasons.

Specifically, single-layer carbon nanotubes are manufactured under severe conditions such as arc discharge and laser ablation, and the manufacturing is not easy. Further, in order to obtain a photothermal conversion functional material using a single-layer carbon nanotube at high reproducibility, a complicated separation procedure is required. As a result, the single-layer carbon nanotubes to be obtained are very expensive.

Accordingly, it is an object of the present invention to provide a novel photothermal conversion material that can be easily synthesized.

#### Solution to Problem

The present inventors have found that a manganese oxide cluster compound having 17 or 21 manganese atoms is obtained by reacting a triptycene having a plurality of carboxy groups and a manganese compound in a polar solvent, furthermore, a compound in which the coordination molecule of the obtained manganese oxide cluster compound is modified is also obtained, and the compound generates heat in a solid state or a solution state when irradiated with visible to near-infrared light (exhibits photothermal conversion behavior). Thus, the present invention has been accomplished.

That is, the present invention provides the following inventions [1] to [12]:

[1] A manganese oxide cluster compound of the following formula (1):

$$[Mn_{21}(\mu_4-O)_{10}(\mu_5-O)_4(L)_6(\alpha^1)_6(\beta^1)_{8-c}(P^1)_c]^{m-} \cdot \gamma^1 \quad (1)$$

wherein

L is a tricarboxytriptycene residue;
$\alpha^1$ is an organic acid residue;
$\beta^1$ is a solvent selected from the group consisting of water and a polar organic solvent having a dielectric constant of from 6 to 47;
$P^1$ is a coordination molecule selected from the group consisting of a nitrogen-containing heterocyclic compound, an oxygen-containing cyclic compound, and phosphines, or a polymer containing the coordination molecule;
$\gamma^1$ is a solvent selected from the group consisting of water and a polar organic solvent having a dielectric constant of from 6 to 47;
q is a number satisfying $0 \leq q \leq 8$; and
m is a number satisfying $0 \leq m \leq 10$;

[2] The compound according to [1], wherein $\alpha^1$ is an alkanoyloxy group having from 2 to 6 carbon atoms;
[3] The compound according to [1] or [2], wherein $\beta^1$ is one or more selected from the group consisting of water, esters, ethers, glycols, glycerol, ketones, alcohols, dimethylformamide, dimethylacetamide, dimethyl sulfoxide, pyridine, and acetonitrile;
[4] The compound according to any one of [1] to [3], wherein $\gamma^1$ is one or more selected from the group consisting of water, esters, ethers, glycols, glycerol, ketones, alcohols, dimethylformamide, dimethylacetamide, dimethyl sulfoxide, pyridine, and acetonitrile;
[5] The compound according to any one of [1] to [4], wherein $P^1$ is a coordination molecule selected from the group consisting of pyridine, imidazole, pyrazole, pyrazine, pyrimidine, triazine, bipyridine, a tri-substituted phosphine, and tetrahydrofuran, or a compound in which a polymer is bonded to the coordination molecule;
[6] A manganese oxide cluster compound of the following formula (2):

$$[Mn_{17}(\mu_3\text{-}O)_2(\mu_4\text{-}O)_4(\mu_5\text{-}O)_6(\mu_3\text{-}OH)_2(L')_6(\alpha^2)_6(\beta^2)_{6r}(P^2)r]\cdot n\cdot\gamma^2 \qquad (2)$$

wherein

L' is a dicarboxytriptycene residue;
$\alpha^2$ is an organic acid residue;
$\beta^2$ is a solvent selected from the group consisting of water and a polar organic solvent having a dielectric constant of from 6 to 47;
$P^2$ is a coordination molecule selected from the group consisting of a nitrogen-containing heterocyclic compound, an oxygen-containing cyclic compound, and phosphines, or a polymer containing the coordination molecule;
$\gamma^2$ is a solvent selected from the group consisting of water and a polar organic solvent having a dielectric constant of from 6 to 47;
r is a number satisfying $0 \leq r \leq 6$; and
n is a number satisfying $0 \leq n \leq 10$;

[7] The compound according to [6], wherein $\alpha^2$ is an alkanoyloxy group having from 2 to 6 carbon atoms;
[8] The compound according to [6] or [7], wherein $\beta^2$ is one or more selected from the group consisting of water, esters, ethers, glycols, glycerol, ketones, alcohols, dimethylformamide, dimethylacetamide, dimethyl sulfoxide, pyridine, and acetonitrile;
[9] The compound according to any one of [6] to [8], wherein $P^2$ is a coordination molecule selected from the group consisting of pyridine, imidazole, pyrazole, pyrazine, pyrimidine, triazine, bipyridine, a tri-substituted phosphine, and tetrahydrofuran, or a compound in which a polymer is bonded to the coordination molecule;
[10] The compound according to any one of [6] to [9], wherein $\gamma^2$ is one or more selected from the group consisting of water, esters, ethers, glycols, glycerol, ketones, alcohols, dimethylformamide, dimethylacetamide, dimethyl sulfoxide, pyridine, and acetonitrile;
[11] A photoexothermic material composition comprising the compound according to any one of [1] to [10]; and
[12] A heat-generating method comprising irradiating a composition containing the compound according to any one of [1] to [10] with light.

Advantageous Effects of Invention

Since the compound of the present invention generates heat in a solid state or a solution state when irradiated with visible to near-infrared light, a composition containing the compound is useful as a photoexothermic material

composition. Near-infrared light has a property of penetrating through living organisms and is therefore applicable to, for example, photothermal therapy for cancer.

Bried Description of Drawings

Figure 1 shows an FT-IR spectrum (KBr method, 25°C) of the complex A.
Figure 2 shows crystal structures estimated from single-crystal X-ray structure analysis data of the complex A.
Figure 3 shows an FT-IR spectrum (KBr method, 25°C) of the complex B.
Figure 4 shows crystal structures estimated from single-crystal X-ray structure analysis data of the complex B.
Figure 5 shows crystal structures estimated from single-crystal X-ray structure analysis data of a crystal obtained by irradiating a single crystal of the complex A with laser light (532 nm, beam size: diameter of 100 $\mu$m, 1 W) for 90 seconds.
Figure 6 shows temperature changes of the samples: a) the complex A, b) the complex B, c) single-layer carbon nanotube, d) manganese(IV) oxide, e) manganese(II) acetate tetrahydrate, and f) raw material 1 when each of the samples was subjected laser irradiation for 5 minutes and cooling for 5 minutes.
Figure 7 shows temperature changes of the complex A irradiated with light (808 nm) at laser powers of a) 1 W, b) 900 mW, c) 800 mW, d) 700 mW, e) 600 mW, f) 500 mW, g) 400 mW, h) 300 mW, i) 200 mW, and j) 100 mW.
Figure 8 shows temperature changes of the complex A by repeating a process of irradiation with laser light for 5 minutes and allowing to cool for 5 minutes 5 times.
Figure 9 shows an FT-IR spectrum (KBr method, 25°C) of the complex C.
Figure 10 shows temperature changes of (a) 20 g/L and (b) 40 g/L complex C aqueous solutions after laser irradiation.
Figure 11 shows temperature changes of (a) 20 g/L and (b) 40 g/L complex C aqueous solutions after repeated laser light irradiation.
Figure 12 shows a crystal structure estimated from single-crystal X-ray structure analysis data of complex D.
Figure 13 shows an FT-IR spectrum (KBr method, 25°C) of complex E.
Figure 14 shows a) a graph showing temperature changes of an aqueous solution of 20 g/L of complex E, b) a graph showing temperature changes of an aqueous solution of 40 g/L of complex E, c) a graph showing cyclic characteristics of photothermal conversion behavior of an aqueous solution of 20 g/L of complex E, and d) a graph showing cyclic characteristics of photothermal conversion behavior of an aqueous solution of 40 g/L of complex E.
Figure 15 shows (a) a graph showing temperature changes of an aqueous solution of 40 g/L of complex E and (b) a graph showing ln($\theta$) versus t plots obtained by using data of (a) when the start of cooling is defined as t = 0.
Figure 16 shows (a) a graph showing temperature changes of an aqueous solution of 40 g/L of the complex C and (b) a graph showing ln($\theta$) versus t plots obtained by using data of (a) when the start of cooling is defined as t = 0.
Figure 17 shows an FT-IR spectrum (KBr method, 25°C) of complex F.
Figure 18 shows an FT-IR spectrum (KBr method, 25°C) of complex G.
Figure 19 is a graph showing temperature-dependent transmittance of a complex F aqueous solution.
Figure 20 shows photographs showing the evaluation of photothermal conversion characteristics of a complex F aqueous solution.
Figure 21 shows the volume changes of complex G (hydrogel) by laser irradiation.
Figure 22 is a graph showing the results of measurement of temperature dependent elastic modulus of complex G.
Figure 23 is a graph showing changes in elastic modulus of complex G by ON and OFF of laser irradiation.

Description of Embodiments

The present invention relates to a manganese oxide cluster compound, a photoexothermic material composition containing the compound, and a heat-generating method using the composition.

The manganese oxide cluster compound of the present invention has a central structure in which manganese ions are bridged by an oxonium ion or a hydroxonium ion (hereinafter, may be referred to as a manganese oxide core) and has a structure in which triptycene having a plurality of carboxy groups coordinates to a manganese ion included in the central structure together with an organic acid residue, a solvent molecule, a coordination molecule, a coordination molecule-bonded polymer, and the like.

The manganese oxide core is, for example,

$$[Mn_{21}(\mu_4\text{-}O)_{10}(\mu_5\text{-}O)_4]^{24+},$$

or

$$[Mn_{17}(\mu_3\text{-}O)_2(\mu_4\text{-}O)_4(\mu_5\text{-}O)_6(\mu_3\text{-}OH)_2]^{18+}$$

The manganese oxide cluster compound has a structure in which triptycene (L or L' described later) having 2 or 3 carboxy groups is coordinated to the manganese oxide core together with an organic acid residue ($\alpha^1$ or $\alpha^2$ described later), a solvent molecule ($\beta^1$ or $\beta^2$ described later), a coordination molecule, a coordination molecule-bonded polymer ($P^1$ or $P^2$ described later), or the like.

In the present specification, "($\mu_4$-O)" means that an oxonium ion is bridged and coordinated with different four metal ions (Mn) . " ($\mu_3$-O)" and " ($\mu_5$-O)" similarly mean that oxonium ions are bridged and coordinated with different three and five metal ions, respectively. Similarly, "($\mu_3$-OH)" means that a hydroxonium ion is bridged and coordinated with three metal ions.

One aspect of the manganese oxide cluster compound of the present invention is a manganese oxide cluster compound of the following formula (1) (hereinafter, may be abbreviated as cluster compound (1)):

$$[Mn_{21}(\mu_4\text{-}O)_{10}(\mu_5\text{-}O)_4(L)_6(\alpha^1)_6(\beta^1)_{8\text{-}}(P^1)_q]m\cdot\gamma^1 \qquad (1)$$

wherein

L is a tricarboxytriptycene residue;
$\alpha^1$ is an organic acid residue;
$\beta^1$ is a solvent selected from the group consisting of water and a polar organic solvent having a dielectric constant of from 6 to 47;
$P^1$ is a coordination molecule selected from the group consisting of a nitrogen-containing heterocyclic compound, an oxygen-containing cyclic compound, and phosphines, or a polymer containing the coordination molecule;
$\gamma^1$ is a solvent selected from the group consisting of water and a polar organic solvent having a dielectric constant of from 6 to 47;
q is a number satisfying $0 \leq q \leq 8$; and
m is a number satisfying $0 \leq m \leq 10$).

The tricarboxytriptycene is a compound having the structure shown below, and is present in a state in which hydrogen atoms are detached from the three carboxy groups in cluster compound (1) of the present invention. In the cluster compound (1) of the present invention, six tricarboxytriptycene residues (L) are coordinated.

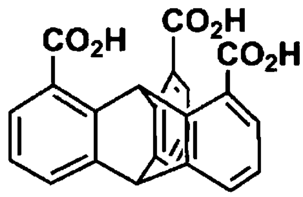

$\alpha^1$ is an organic acid residue.

Examples of the organic acid include fatty acid and aromatic carboxylic acid, and fatty acid is preferable, fatty acid having from 2 to 6 carbon atoms is more preferable, and acetic acid is further preferable. Accordingly, the organic fatty acid residue is more preferably an alkanoyloxy group having from 2 to 6 carbon atoms and further preferably an acetoxy group.

$\beta^1$ is a solvent selected from the group consisting of water and a polar organic solvent having a dielectric constant of from 6 to 47.

Specifically, as water and the polar organic solvent having a dielectric constant of from 6 to 47, preferred is one or more selected from the group consisting of water, esters, ethers, glycols, glycerol, ketones, alcohols, dimethylformamide, dimethylacetamide, dimethyl sulfoxide, pyridine, and acetonitrile. More specifically, preferred is one or more selected from the group consisting of water, ethyl acetate, tetrahydrofuran, dimethyl ether, 1,2-dimethoxyethane, diethylene glycol diethyl ether, ethylene glycol, diethylene glycol, polyethylene glycol, glycerol, acetone, an alcohol having from 1 to 4 carbon atoms, dimethylformamide, dimethylacetamide, dimethyl sulfoxide, pyridine, and acetonitrile.

Further preferred is one or more selected from the group consisting of water, tetrahydrofuran, acetone, an alcohol having from 1 to 4 carbon atoms, dimethylformamide, dimethylacetamide, dimethyl sulfoxide, pyridine, and acetonitrile.

$P^1$ is a coordination molecule selected from the group consisting of a nitrogen-containing heterocyclic compound, an oxygen-containing cyclic compound, and phosphines, or a polymer containing the coordination molecule.

Examples of the nitrogen-containing heterocyclic compound include a compound having from 1 to 3 five- or six-membered heterocycles each including from 1 to 4 nitrogen atoms, specifically, pyridine, imidazole, pyrazole, pyrazine,

pyrimidine, triazine, and bipyridine.

Examples of the oxygen-containing cyclic compound include furan, tetrahydrofuran, and dioxane, and tetrahydrofuran is preferable.

Examples of the phosphines include a tri-substituted phosphine, such as triphenylphosphine.

The coordination molecule of $P^1$ is preferably a coordination molecule selected from the group consisting of pyridine, imidazole, pyrazole, pyrazine, pyrimidine, triazine, bipyridine, a tri-substituted phosphine, and tetrahydrofuran.

Examples of the polymer containing the coordination molecule of $P^1$ include polymers that include an ether, an ester, a thioester, an amide, an alkylamide, a dialkylsiloxane, an alkyl, acetylene, diacetylene, an aromatic, or the like as the coordination molecule. Examples of the polymer including an ether include polyalkylene glycol such as polyethylene glycol and polypropylene glycol. Examples of the polymer including an ester include a polymer including a -OC(=O)- bond. Examples of the polymer including a thioester include polymers including a -SC(=S)- bond and a -SC(=S)S- bond. Examples of the polymer including an ester and a thioester include -(C1-C20 alkyl)-OC(=O)-(straight or branched alkylene optionally having a substituent) $_{1\text{-}100000}$-SC(=S)S-(C1-C20 alkyl). Here, examples of the substituent include an alkylaminocarbonyl group.

$\gamma^1$ is a solvent selected from the group consisting of water and a polar organic solvent having a dielectric constant of from 6 to 47.

Specifically, as water and the polar organic solvent having a dielectric constant of from 6 to 47, preferred is one or more selected from the group consisting of water, esters, ethers, glycols, glycerol, ketones, alcohols, dimethylformamide, dimethyl sulfoxide, pyridine, and acetonitrile. More specifically, preferred is one or more selected from the group consisting of water, ethyl acetate, tetrahydrofuran, dimethyl ether, 1,2-dimethoxyethane, diethylene glycol diethyl ether, ethylene glycol, diethylene glycol, polyethylene glycol, glycerol, acetone, an alcohol having from 1 to 4 carbon atoms, dimethylformamide, dimethylacetamide, dimethyl sulfoxide, pyridine, and acetonitrile. More preferred is one or more selected from the group consisting of water, tetrahydrofuran, 1,2-dimethoxyethane, diethylene glycol diethyl ether, ethylene glycol, diethylene glycol, polyethylene glycol, glycerol, acetone, an alcohol having from 1 to 4 carbon atoms, dimethylformamide, dimethylacetamide, dimethyl sulfoxide, pyridine, and acetonitrile.

q is a number satisfying $0 \leq q \leq 8$ and may be $q = 0$ or may satisfy $0 < q \leq 8$.

m is a number satisfying $0 \leq m \leq 10$, preferably $0 \leq m \leq 8$, and more preferably $0 \leq m \leq 6$.

When $\gamma^1$ includes two or more solvents, m represents the total value of the solvents.

Another aspect of the manganese oxide cluster compound of the present invention is a manganese oxide cluster compound of the formula (2) below (hereinafter, may be abbreviated as cluster compound (2)):

$$[Mn_{17}(\mu_3\text{-}O)_2(\mu_4\text{-}O)_4(\mu_5\text{-}O)_6(\mu_3\text{-}OH)_2(L')_6(\alpha^2)_6(\beta^2)_{6-r}(P^2)r]n\cdot\gamma^2 \qquad (2)$$

wherein

L' is a dicarboxytriptycene residue;
$\alpha^2$ is an organic acid residue;
$\beta^2$ is a solvent selected from the group consisting of water and a polar organic solvent having a dielectric constant of from 6 to 47;
$P^2$ is a coordination molecule selected from the group consisting of a nitrogen-containing heterocyclic compound, an oxygen-containing cyclic compound, and phosphines, or a polymer containing the coordination molecule;
$\gamma^2$ is a solvent selected from the group consisting of water and a polar organic solvent having a dielectric constant of from 6 to 47;
r is a number satisfying $0 \leq m \leq 6$; and
n is a number satisfying $0 \leq n \leq 10$.

The dicarboxytriptycene is a compound having a structure below and is, in the cluster compound (2) of the present invention, present in a state in which hydrogen atoms are detached from the two carboxy groups. In the cluster compound (2) of the present invention, six dicarboxytriptycene residues are coordinated.

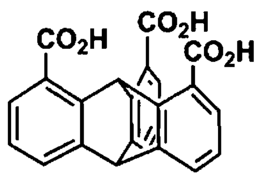

$\alpha^2$ is an organic acid residue.

Examples of the organic acid include fatty acid and aromatic carboxylic acid, and fatty acid is preferable, fatty acid having from 2 to 6 carbon atoms is more preferable, and acetic acid is further preferable. Accordingly, the organic fatty acid residue is more preferably an alkanoyloxy group having from 2 to 6 carbon atoms and further preferably an acetoxy group.
$\beta^2$ is a solvent selected from the group consisting of water and a polar organic solvent having a dielectric constant of from 6 to 47.
Specifically, as water and the polar organic solvent having a dielectric constant of from 6 to 47, preferred is one or more selected from the group consisting of water, esters, ethers, glycols, glycerol, ketones, alcohols, dimethylformamide, dimethylacetamide, dimethyl sulfoxide, pyridine, and acetonitrile. More specifically, preferred is one or more selected from the group consisting of water, ethyl acetate, tetrahydrofuran, dimethyl ether, 1,2-dimethoxyethane, diethylene glycol diethyl ether, ethylene glycol, diethylene glycol, polyethylene glycol, glycerol, acetone, an alcohol having from 1 to 4 carbon atoms, dimethylformamide, dimethylacetamide, dimethyl sulfoxide, pyridine, and acetonitrile.
Further preferred is one or more selected from the group consisting of water, tetrahydrofuran, acetone, an alcohol having from 1 to 4 carbon atoms, dimethylformamide, dimethylacetamide, dimethyl sulfoxide, pyridine, and acetonitrile.
$P^2$ is a coordination molecule selected from the group consisting of a nitrogen-containing heterocyclic compound, an oxygen-containing cyclic compound, and phosphines, or a polymer containing the coordination molecule.
Examples of the nitrogen-containing heterocyclic compound include a compound having from 1 to 3 five- or six-membered heterocycles each including from 1 to 4 nitrogen atoms, specifically, pyridine, imidazole, pyrazole, pyrazine, pyrimidine, triazine, and bipyridine.
Examples of the oxygen-containing cyclic compound include furan, tetrahydrofuran, and dioxane, and tetrahydrofuran is preferable.
Examples of the phosphines include a tri-substituted phosphine, such as triphenylphosphine.
The coordination molecule of $P^2$ is preferably a coordination molecule selected from the group consisting of pyridine, imidazole, pyrazole, pyrazine, pyrimidine, triazine, bipyridine, a tri-substituted phosphine, and tetrahydrofuran.
Examples of the polymer having the coordination molecule of $P^2$ include polymers that include an ether, an ester, a thioester, an amide, an alkylamide, a dialkylsiloxane, an alkyl, acetylene, diacetylene, an aromatic, or the like as the coordination molecule. Examples of the polymer having an ether include polyalkylene glycol such as polyethylene glycol and polypropylene glycol. Examples of the polymer including an ester include a polymer having a -OC(=O)- bond. Examples of the polymer having a thioester include polymers having a -SC(=S)- bond and a -SC(=S)S- bond. Examples of the polymer having an ester and a thioester include -($C_1$-$C_{20}$ alkyl)-OC(=O)-(straight or branched alkylene optionally having a substituent)$_{1\text{-}100000}$-SC(=S)S-($C_1$-$C_{20}$ alkyl). Here, examples of the substituent include an alkylaminocarbonyl group.
$\gamma^2$ is a solvent selected from the group consisting of water and a polar organic solvent having a dielectric constant of from 6 to 47.
As water and the polar organic solvent having a dielectric constant of from 6 to 47, specifically, preferred is one or more selected from the group consisting of water, esters, ethers, glycols, glycerol, ketones, alcohols, dimethylformamide, dimethyl sulfoxide, pyridine, and acetonitrile. More specifically, preferred is one or more selected from the group consisting of water, ethyl acetate, tetrahydrofuran, dimethyl ether, 1,2-dimethoxyethane, diethylene glycol diethyl ether, ethylene glycol, diethylene glycol, polyethylene glycol, glycerol, acetone, an alcohol having from 1 to 4 carbon atoms, dimethylformamide, dimethylacetamide, dimethyl sulfoxide, pyridine, and acetonitrile. More preferred is one or more selected from the group consisting of water, tetrahydrofuran, 1,2-dimethoxyethane, diethylene glycol diethyl ether, ethylene glycol, diethylene glycol, polyethylene glycol, glycerol, acetone, an alcohol having from 1 to 4 carbon atoms, dimethylformamide, dimethylacetamide, dimethyl sulfoxide, pyridine, and acetonitrile.
r is a number satisfying $0 \leq r \leq 6$ and may be $r = 0$ or may satisfy $0 < r \leq 8$.
n is a number satisfying $0 \leq n \leq 10$, preferably $0 \leq n \leq 8$, and more preferably $0 \leq n \leq 6$.
When $\gamma^2$ includes two or more solvents, n represents the total value of the solvents.
The manganese oxide cluster compound of the present invention can be manufactured by heating and reacting tricarboxytriptycene or dicarboxytriptycene and a manganese compound ($Mn(\alpha^1)_2$ or $Mn(\alpha^2)_2$ or a hydrate thereof) in a solvent selected from polar organic solvents having a dielectric constant of from 6 to 47.
Although it varies depending on the solvent to be used, the thermal reaction may be carried out usually at from 50°C to 150°C.
The reaction time is also not particularly limited and can be appropriately adjusted depending on the degree of progress in reaction, and may be usually from 1 to 120 hours.
The cluster compound to be obtained can be isolated as a crystal, but also can be obtained as an aqueous solution by ligand exchange reaction. The solvent that is used in the ligand exchange reaction is not particularly limited, but, for example, methylene chloride can be used. For example, $\beta^1$ or $\beta^2$ can be replaced by pyridine-polyethylene glycol by using a polymer in which one end of polyethylene glycol is modified with pyridine (hereinafter, referred to as "Py-PEG").
A manganese oxide cluster compound in which the ligand is replaced by pyridine-polyethylene glycol can be obtained by an aqueous solution.

Manufacturing of a polymer-introduced ligand uses a method of introducing a coordinating functional group or a molecular unit that is coordinated as a ligand into an end of a polymer as described above, a method of using radical polymerization represented by RAFT polymerization, a method of extending a polymer from the coordination molecule side by utilizing anion polymerization or the like, or another method. The molecular weight of the polymer to be introduced is not particularly limited, but when polyethylene glycol is used, it is possible to use polyethylene glycol having an average molecular weight of from 500 to 20000, and polyethylene glycol having an average molecular weight of from 1000 to 20000 is preferable from the viewpoint of water solubility. Examples of the coordination molecule that actually coordinates to a manganese oxide cluster include the above-mentioned pyridine, imidazole, pyrazole, pyrazine, pyrimidine, triazine, bipyridine, phosphines, and tetrahydrofuran, and pyridine is preferably used from the viewpoint of synthetic simplicity and formation of a strong coordinate bond with a manganese ion.

The solvent that is used in the ligand exchange reaction is not particularly limited, but examples thereof include methylene chloride as a representative example. In addition, since a polymer may be obtained as a solution by exchange with the introduced ligand, chloroform, acetone, and so on can be used.

In the manganese oxide cluster compound, since the polymer can be arranged in eight conformations for Mn21 cluster and four conformations for Mn17 cluster, it is possible to exchange all exchangeable conformations with polymer ligands by using a polymer ligand component of 8 or 4 equivalents or more in order to exchange all conformations with the polymer. In the case of less than each equivalent, generally, since the exchange is random, the composition is composed of compounds with different numbers of conformations and different conformational configurations.

Further, in a case of a molecule in which a polymer having an ester, a thioester, an amide, an alkylamide, a dialkylsiloxane, an alkyl, acetylene, diacetylene, an aromatic, or the like other than polyethylene glycol is bonded to a ligand molecule, the polymer portion has an average molecular weight of at least 500 or more, preferably 1000 or more, and more preferably 5000 or more and at most 1000000 or less, preferably 100000 or less, more preferably 50000, and further preferably 20000 or less, and examples thereof include a molecular weight of from 1000 to 100000, from 1000 to 50000, from 500 to 20000, and from 1000 to 20000.

When a polymer compound is manufactured using RAFT polymerization or the like, a compound with a trithiocarbonate structure can also be used. A material having a radical polymerizable olefin structure can be introduced, and a star-shaped cluster having a manganese oxide cluster compound at the center can also be manufactured. When a bridged structure of a RAFT polymerization portion and a manganese oxide cluster is introduced with an alkyl group, the base part of the polymer aggregates through hydrophobic bonds, and the stability of the manganese oxide cluster in water can be increased.

The manganese oxide cluster compound of the present invention generates heat by irradiation with light in a solid state and a solution state (exhibits photothermal conversion behavior). Here, the wavelength of the light to be applied is not particularly limited, but the light is preferably from visible to near-infrared light.

This photoexothermic reaction is terminated by stopping the light irradiation, but the exothermic reaction occurs again by irradiation with light. That is, this photoexothermic reaction has repeatability.

The wavelength of light that causes the exothermic reaction is not particularly limited, but is usually from visible to near-infrared light and is preferably from 400 to 900 nm.

A manganese oxide cluster compound in which $\beta^1$ or $\beta^2$ is exchanged with a ligand including polyethylene glycol can be obtained as an aqueous solution by introducing the properties of the polymer into the cluster. It can be confirmed that even in water, the exothermic reaction due to light irradiation, furthermore, repetition of the exothermic reaction and heat-releasing reaction occurs in conjunction with repeated ON/OFF reaction of laser irradiation.

The manganese oxide cluster having the polymer ligand introduced exhibits hysteresis for temperature change and transmittance measurement in an aqueous solution, and the LCST effect was confirmed.

Further, in a compound having polymer ligands radially introduced into a manganic acid cluster wherein water is added to the compound to be gel, the volume change due to ON/OFF of laser was observed.

Accordingly, the composition containing a manganese oxide cluster compound of the present invention is useful as a photoexothermic material composition.

A variety of function-groups such as a functional group and a polymer chain can be easily introduced the manganese oxide cluster compound of the present invention by ligand exchange while maintaining the photothermal conversion ability. Consequently, according to the application purpose, functionalization, such as dissolution in a polar solvent, dissolution in a nonpolar solvent, and uniform dispersion in a polymer matrix is possible.

The photoexothermic material composition of the present invention can be used in a state containing the manganese oxide cluster in a solid state or a solution state, can also be molded into various forms such as film and rectangular shapes by kneading with a resin, and can be used as a solution filled in a container.

The photoexothermic material composition of the present invention generates heat by near-infrared light, which penetrates through living organisms, and therefore can be applied to, for example, photothermal therapy for cancer.

Another aspect of the present invention is a heat-generating method comprising irradiating a composition containing the manganese oxide cluster compound of the present invention with light.

Here, the wavelength of the light to be applied is preferably from visible to near-infrared light.

The strength of the light to be applied is not particularly limited and can be used depending on the light source to be utilized, and commercially available light source, apparatus, and so on can be appropriately used.

The irradiation time of light is not particularly limited and can be appropriately set according to the heat quantity to be extracted according to the light irradiation.

For example, in the case of the cluster compound (1), when light of 808 nm is applied at a laser power of 1 W, the cluster compound (1) of 20°C generated heat up to 135°C in 5 minutes.

EXAMPLES

Now, the present invention will be described in detail with reference to Examples, but the present invention is by no means limited these Examples.

(Infrared absorption spectrum (IR) measurement method)

A solid specimen to be measured was pulverized together with potassium bromide (manufactured by FUJIFILM Wako Pure Chemical Corporation, for IR absorption measurement), diluted and mixed, and molding was then performed using press molding equipment to obtain a disk-shaped measurement sample.

[Measurement conditions]

Measurement apparatus: manufactured by JASCO Corporation, Fourier transform infrared spectrophotometer FT/IR-6600; and
Measurement wavenumber: from 4000 to 400 $cm^{-1}$

(Transmittance)

The transmittance was measured as follows.

[Measurement conditions]

Measurement apparatus: manufactured by JASCO Corporation, UV visible near-infrared spectrophotometer V?670; and
manufactured by JASCO Corporation, thermostat CTU-100; and
Measurement wavelength: 600 nm.

(X-ray structure analysis)

Single crystals to be measured were mounted on a crystal mounting device using Immersion Oil, type B (manufactured by Cargille Laboratories, Inc.: code 1248), and measurement was performed in a flow of low-temperature nitrogen.

[Measurement conditions]

Apparatus: manufactured by Rigaku Corporation, XtaLAB Synergy-DW;
Detector: manufactured by Rigaku Corporation, HyPix-6000;
Crystal mounting device: manufactured by MiTeGen, LLC, MicroMount™; and
Measurement wavelength: Cu-K$\alpha$ ray, $\lambda$ = 1.54184 angstrom.

(Molecular weight)

The molecular weight was measured by high-performance liquid chromatography.

Apparatus: JASCO:

HPLC pump: PU-4580;
HPLC autosampler: AS-4550;
Deaeration unit: DG-4580;
Column: TSKgel Super AW3000;
Column oven: CO-4060;
Refractive index detector: RI-4030; and
Photodiode array detector: MD-4010.

Measurement:

Column temperature: 40°C;
Eluent: N,N-dimethylformamide;
Flow rate: 0.4 mL/min; and
Standard curve: produced using standard polystyrene (TSK standard polystyrene, TOSOH).

(Photothermal conversion efficiency)

Evaluation was performed in accordance with a previously reported method for evaluating photothermal conversion efficiency (D.K. Roper, et al., J. Phys. Chem. C, 2007, 111, 3636; Zeng, et al., Adv. Healthcare Mater., 2016, 5, 772).

The photothermal conversion efficiency $\eta$ can be calculated by the equation (1):

$$\eta = \frac{m\,c\,\left(T_{\max} - T_{\max,\mathrm{water}}\right)}{I\,(1 - 10^{-A})\,\tau_s} \quad \text{(Equation 1)}$$

Here, m is the mass of a solution, c is the specific heat of water, $T_{max}$ and $T_{max,water}$ are the maximum temperature changes of a specimen solution and water, I is laser power, A is the absorbance of a specimen solution, and $\tau_s$ is the time constant. The time constant $\tau_s$ was calculated using the equation (2) from a change in solution temperature (T) versus cooling time (t) immediately after laser irradiation stopped. Here, $T_{max}$ and $T_{amb}$ are constants and are the maximum temperature of the solution obtained at the time of laser irradiation and the ambient temperature, respectively.

$$\theta = e^{\frac{-t}{\tau_s}} = \frac{T_{\mathrm{amb}} - T}{T_{\mathrm{amb}} - T_{\max}} \quad \text{Equation (2)}$$

(Rheology measurement method)

[Measurement conditions]

The rheology was measured using MCR102 rotational rheometer manufactured by Anton Paar GmbH and a parallel plate type jig having a diameter of 5 mm. The distance between the jig and a sample was fixed at 1 mm.

Measurement apparatus: manufactured by Anton Paar GmbH, MCR102 rotational rheometer;
Jig used: parallel plate type jig having a diameter of 5 mm;
Sampel gap: 1 mm;
Deformation: 0.1
Frequency: 1 Hz

(Example 1)

Synthesis of $[Mn_{21}(\mu_4\text{-}O)_{10}(\mu_5\text{-}O)_4(L)_6(OAc)_6(dmf)_8]\cdot 4DMF$ (hereinafter, "complex A")

1,8,13-Tricarboxytriptycene (hereinafter, "raw material 1", 20 mg, 0.052 mmol) synthesized by the method described in S. Das, et al., ACS Nano., 2021, 15, 11168-11179 was dissolved in N,N-dimethylformamide (DMF:

manufactured by Kanto Chemical Co., Ltd., dehydration: 2 mL). To this solution, manganese(II) acetate tetrahydrate (manufactured by FUJIFILM Wako Pure Chemical Corporation, special grade: 76 mg, 0.31 mmol) was added, followed by heating at 80°C for 1 hour. The resulting reaction solution was left to stand for 24 hours while maintaining 80°C to generate a crystal. The crystal was collected by filtration and further washed with DMF to obtain a black crystal of $[Mn_{21}(\mu_4\text{-}O)_{10}(\mu_5\text{-}O)_4(L)_6(OAc)_6(dmf)_8]\cdot 4DMF$ (29 mg, yield based on raw material 1: 67%).

The results of the FT-IR spectrum of the obtained complex A measured by the above-described IR measurement method are shown in Figure 1. The symmetric vibration and asymmetric vibration of carboxylate attributed to the bidentate bridging coordination mode were observed at 1407 $cm^{-1}$ and 1562 $cm^{-1}$, respectively, and the stretching vibration of carbonyl of DMF was observed at 1659 $cm^{-1}$.

The obtained single crystal of the complex A was subjected to X-ray structure analysis in accordance with the method described above. The results are shown below:
The crystal data of the complex A: black block, 0.105 $\times$ 0.063 $\times$ 0.056mm$^3$, monoclinic, $P2_1/c$, a = 17.93120 (10) Å, b = 17.25650 (10) Å, c = 33.7326 (2) Å, $\beta$ = 96.0560 (10) Å, V = 10379.62 (11) Å$^3$, Z = 2, density$_{calcd}$ = 1.663 gcm$^{-3}$, T = 93.15 K, Cu-K$\alpha$ ray, $\lambda$ = 1.54184 angstrom, $\mu$ = 10.810 mm$^{-1}$, 102820 reflections measured, 21252 unique reflections, 1430 parameters, $R_{int}$ = 0.0392, GOF = 1.030, $R_1$ = 0.0534 (I > 2$\sigma$ (I)), $wR_2$ = 0.1673 (all data), $\Delta\rho_{max, min}$ = 3.09/-1.00e Å$^3$

Crystal structures estimated from the above crystal data are shown in Figure 2.

(Example 2)

Synthesis of $[Mn_{17}(\mu_3\text{-}O)_2(\mu_4\text{-}O)_4(\mu_5\text{-}O)_6(\mu_3\text{-}OH)_2(L')_6(OAc)_6(H_2O)_2(thf)_4]\cdot 5(THF)(H_2O)$ (hereinafter, "complex B")

1,8-Dicarboxytriptycene (hereinafter, "raw material 2", 20 mg, 0.058 mmol) synthesized by the method described in S. Acevedo, et al., J. Chem. Soc., Perkin Trans. 2, 1986, 2051-2054 was dissolved in tetrahydrofuran (THF, manufactured by Kanto Chemical Co., Ltd., dehydration, 2 mL). A reaction mixture obtained by adding manganese(II) acetate tetrahydrate (86 mg, 0.35 mmol) to this solution was heated and refluxed under stirring for 1 hour.

The reaction mixture was cooled down to room temperature and was filtered through a syringe filter, followed by leaving to stand for 2 days while maintaining 60°C to generate a crystal. The generated crystal was collected by filtration and further washed with THF to obtain a brown crystal of $[Mn_{17}(\mu_3\text{-}O)_2(\mu_4\text{-}O)_4(\mu_5\text{-}O)_6(\mu_3\text{-}OH)_2(L')_6(OAc)_6(H_2O)_2(thf)_4]\cdot 5(THF)(H_2O)$ (11 mg, yield based on raw material 2: 26%).

The FT-IR spectrum of the obtained complex B was measured by the above-described method. The results are shown in Figure 3. The symmetric and asymmetric vibrations of carboxylate attributed to the bidentate bridging coordination mode were observed at 1400 $cm^{-1}$ and 1556 $cm^{-1}$, respectively.

The single crystal of the complex B was subjected to X-ray structure analysis in accordance with the method described above. The results are shown below:

The crystal data of the complex B: brown plate, 0.334 $\times$ 0.212 $\times$ 0.073 mm$^3$, triclinic, P-1, a = 17.0016 (2) Å, b = 17.9744 (2) Å, c = 18.2437 (2) Å, $\alpha$ = 108.3900 (10)°, $\beta$ = 92.8510 (10)°, $\gamma$ = 100.5130 (10)°, V = 5167.12 (11) Å$^3$, Z = 1, density$_{calcd}$ = 1.473 gcm$^{-3}$, T = 93.15 K, CuK$\alpha$ radiation, $\lambda$ =1.54184 Å, $\mu$ = 8.842 mm$^{-1}$, 95857 reflections measured, 21053 unique reflections, 1292 parameters, $R_{int}$ = 0.0585, GOF = 1.037, $R_1$ = 0.0694 (I > 2$\sigma$ (I)), $wR_2$ = 0.2252 (all data), $\Delta\rho_{max, min}$ = 1.79/-1.17e Å$^3$
Crystal structures estimated from the above data are shown in Figure 4.

(Example 3)

The single crystal of the complex A was irradiated with laser light (532 nm, beam size: diameter of 100 $\mu$m, 1 W) for 90 seconds. The obtained crystal was subjected to single-crystal X-ray structure analysis. The data are shown below:

The crystal data of the complex A after laser light irradiation: black block, 0.136 $\times$ 0.071 $\times$ 0.056 mm$^3$, monoclinic, $P2_1/n$, a = 18.1229 (3) Å, b = 17.4351 (3) Å, c = 27.9651 (4) Å, $\beta$ = 92.7820 (10)°, V = 8825.8 (2) Å$^3$, Z = 2, density$_{calcd}$ = 1.777 gcm$^{-3}$, T = 93.15 K, CuK$\alpha$ radiation, $\lambda$ = 1.54184 Å, $\mu$ = 12.332 mm$^{-1}$, 85052 reflections measured, 17575 unique reflections, 1288 parameters, $R_{int}$ = 0.0814, GOF = 1.078, $R_1$ = 0.0678 (I > 2$\sigma$ (I)), $wR_2$ = 0.2018 (all data), $\Delta\rho_{max, min}$ = 5.26/-0.93e Å$^3$
Crystal structures estimated from the above data are shown in Figure 5.

(Example 4)

The complex A was packed into microtubes with a diameter of 4.4 mm up to a height of 1 cm. The microtubes were each irradiated with laser light (manufactured by CivilLaser, 808 nm semiconductor laser, 808 nm, beam size: 5 $\times$ 5 mm, 1

W) for 5 minutes and then allowed to cool for 5 minutes. The temperature changes of the samples after the start of laser light irradiation were measured with an infrared camera (manufactured by FLIR, E50). The results are shown in Figure 6 (a). The temperature after the laser light irradiation was 137°C. The temperature measured with the infrared camera is the average of surface temperatures measured three times, and the same applies below.

(Example 5)

In Example 4, the temperature changes due to laser irradiation were measured by the same procedure as above except that the complex A was changed to the complex B. The results are shown in Table 6 (b). The temperature after laser light irradiation was 123°C.

(Comparative Examples 1 to 4)

A single-layer carbon nanotube (Comparative Example 1), manganese(IV) oxide (Comparative Example 2), manganese(II) acetate tetrahydrate (Comparative Example 3), and 1,8,13-tricarboxytriptycene (Comparative Example 4) were similarly irradiated with laser light by the same procedure as in Example 4, and sample temperature changes were measured. The results are shown in Figure 6 (c) to (f).

The temperatures after laser light irradiation of the single-layer carbon nanotube and manganese(IV) oxide were both 130°C. The temperature rises of manganese (II) acetate tetrahydrate and raw material A were both 3°C or less.

(Example 6)

The complex A was irradiated with laser light under the same conditions as in Example 4 except that the power of laser light was 100 mW, and the temperature change was measured. Similarly, the temperature changes were measured by increasing the power of laser light in increments of 100 mW up to 1000 mW, i.e., 200 mW, 300 mW, and so on. The results are shown in Figure 7.

(Example 7)

The complex A was irradiated with laser light for 5 minutes and allowed to cool for 5 minutes under the same conditions as in Example 4, and the same process was then repeated five times, and the temperature change was measured. The results are shown in Figure 8.

The maximum temperatures in the process of the series of 6 times of the heat-generating by laser light irradiation and cooling cycle are 135.8°C $\pm$ 1.7°C, which indicate stable. Thus, it has been confirmed that the complex A has cyclability.

(Example 8)

$[Mn_{21}(\mu_4\text{-}O)_{10}(\mu_5\text{-}O)_4(L)_6(OAc)_6(Py\text{-}PEG_{2000})_8]$ (hereinafter, synthesis of "complex C")

The complex A (20 mg, 4.1 μmol) was dissolved in dichloromethane (10 mL). Subsequently, a polymer in which one end of polyethylene glycol was modified with a pyridyl group (hereinafter, referred to as "Py-PEG") was synthesized using poly(ethylene glycol) methyl ether (number-average molecular weight Mn = 2000 g/mol) as a raw material by the method described in M.E. Robinson, et al., ACS Nano., 2017, 11, 9162-9175.

The Py-PEG (67.7 mg, 32.5 μmol) was added to the dichloromethane solution of the complex A, followed by stirring at room temperature for 24 hours. The obtained reaction mixture was filtered, and the obtained filtrate was dried under reduced pressure to obtain a deep brown powder of the complex C (81.2 mg, yield based on the complex A: 90%).

The FT-IR spectrum of the complex C was measured by the above-described IR measurement method. As a result, in addition to the signal of the Py-PEG, signals attributed to the symmetric and asymmetric vibrations of carboxylate were observed. The stretching vibration of carbonyl derived from DMF, which was observed in the FT-IR spectrum of the complex A, was not observed. Thus, it has been confirmed that ligand exchange between the DMF and the Py-PEG proceeded. The results are shown in Figure 9.

(Example 9)

An aqueous solution having a concentration of 20 g/L of the complex C was prepared. The aqueous solution was added to microtubes having a diameter of 4.4 mm up to a height of 1 cm. Hereinafter, the aqueous solution of respective concentrations were irradiated with laser light under the same conditions as in Example 4, and the temperature changes of

the sample were measured. The results are shown in Figure 10 (a). The aqueous solution temperature after laser irradiation was 40.4°C.

(Example 10)

The experiment was carried out in the same manner as in Example 9 except that the aqueous solution having a concentration of 40 g/L of the complex C was used. The results are shown in Figure 10 (b). The temperature of the aqueous solution after laser irradiation was 53.0°C.

(Example 11)

An aqueous solution having the same concentration of the complex C as in Example 9 was subjected to repeating laser irradiation by the same procedure as in Example 7, and the temperature change was measured. The results are shown in Figure 11 (a).

The maximum temperatures in the process of the heat-generating by laser light irradiation and cooling cycle are 40.6°C $\pm$ 0.5°C, which indicates stable. Thus, it has been confirmed that the complex C has cyclability.

(Example 12)

An aqueous solution having the same concentration of the complex C as in Example 10 was subjected to repeating laser irradiation by the same procedure as in Example 7, and the temperature change was measured. The results are shown in Figure 11 (b).

The maximum temperatures in the process of the heat-generating by laser light irradiation and cooling cycle are 55.1°C $\pm$ 1.1°C, which indicates stable. Thus, it has been confirmed that the complex C has cyclability.

(Example 13)

(Synthesis of complex D)

Synthesis of $[Mn_{21}(\mu_4\text{-}O)_{10}(\mu_5\text{-}O)_4(L)_6(OAc)_6(pyridine)_8]$ (hereinafter, referred to as "complex D")

Dichloromethane (manufactured by Kanto Chemical Co., Ltd., 20 mL) and pyridine (manufactured by Kanto Chemical Co., Ltd., 6.58 $\mu$L, 81.6 $\mu$mol) were added to the complex A (2.50 mg, 0.509 $\mu$mol). Acetone (1.5 mL) was slowly added onto the obtained reaction solution such that the solutions form the respective layers, and the solutions of the respective layers were allowed to slowly diffuse over time. After leaving to stand for 2 weeks, a black crystal of complex D was obtained.

The single crystal of the complex D was subjected to single-crystal X-ray structure analysis. The data are shown below:

> The crystal data of the complex D: black block, 0.104 $\times$ 0.155 $\times$ 0.156mm$^3$, Triclinic, P-1, a = 18.1001 (2) Å, b = 18.5399 (2), c = 20.6332 (2) Å, $\alpha$ = 67.5260 (10)°, $\beta$ = 64.3490 (10)°, $\gamma$ = 74.3300 (10)°, V = 5721.90 (12) Å$^3$, Z = 2, density$_{calcd}$ = 1.350 gcm$^{-3}$, T = 93.15 K, CuK$\alpha$ radiation, $\lambda$ = 1.54184 Å, $\mu$ = 9.682 mm$^{-1}$, 210780 reflections measured, 22896 unique reflections, 1266 parameters, $R_{int}$ = 0.0528, GOF = 1.068, $R_1$ = 0.0489 (I > 2$\sigma$ (I)), $w_{R2}$ = 0.1419 (all data), $\Delta\rho_{max,\ min}$ = 1.205/-0.902 e Å$^3$
>
> Crystal structures estimated from the above data are shown in Figure 12.

(Example 14)

(Synthesis of complex E)

Synthesis of $[Mn_{21}(\mu_4\text{-}O)_{10}(\mu_5\text{-}O)_4(L)_6(OAc)_6(Py\text{-}PEG_{5000})_8]$ (hereinafter, referred to as "complex E")

The complex A (40 mg, 4.1 $\mu$mol) was dissolved in dichloromethane (manufactured by Kanto Chemical Co., Ltd., 20 mL). Subsequently, a polymer having one end of polyethylene glycol modified with a pyridyl group (hereinafter, referred to as " Py-PEG$_{5000}$") was synthesized using poly(ethylene glycol) methyl ether (manufactured by Sigma-Aldrich, number-average molecular weight Mn = 5000 g/mol) as a raw material by the method described in M.E. Robinson, et al., ACS Nano. 2017, 11, 9162-9175.

The Py-PEG$_{5000}$ (330.1 mg, 65.2 $\mu$mol) was added to the dichloromethane solution of the complex A, followed by

stirring at room temperature for 24 hours. The obtained reaction mixture was filtered, and the obtained filtrate was dried under reduced pressure to obtain a deep brown powder of complex E (354.8 mg, yield based on the complex A: 73%).

The FT-IR spectrum of the complex E was measured by the above-described IR measurement method. As a result, in addition to the signal of the Py-$PEG_{5000}$, signals attributed to the symmetric and asymmetric vibrations of carboxylate were observed. Since the stretching vibration (1659 $cm^{-1}$) of carbonyl derived from DMF, which was observed in the FT-IR spectrum of the complex A, was not observed, it was confirmed that ligand exchange between the DMF and the Py-$PEG_{5000}$ proceeded. The results are shown in Figure 13.

(Example 15)

(Evaluation of photothermal conversion characteristic of complex E)

An aqueous solution of complex E was prepared at a concentration of 20 g/L. The aqueous solution was added to a microtube having a diameter of 4.4 mm up to a height of 1 cm. This microtube was irradiated with laser light (manufactured by CivilLaser, 808 nm semiconductor laser, 808 nm, beam size: 5 × 5 mm, 1 W) for 5 minutes and then allowed to cool for 5 minutes as in Example 4. The temperature changes of the sample after the start of laser light irradiation were measured with an infrared camera (manufactured by FLIR, E50). The results are shown in Figure 14 (a). The maximum temperature of the aqueous solution after laser irradiation was 36.0°C.

(Example 16)

An aqueous solution of complex E was prepared at a concentration of 40 g/L and was irradiated with laser light as in Example 4. The results are shown in Figure 14 (b). The maximum temperature of the aqueous solution after laser irradiation was 46.1°C.

(Example 17)

An aqueous solution of complex E at a concentration of 20 g/L was subjected to a cycle experiment by the same procedure as in Example 7. Since the results are shown in Figure 14 (c). Since the maximum temperatures in the process of the heat-generating by laser light irradiation and cooling cycle are 36.2°C ± 0.1°C, which indicates stable. Thus, it has been confirmed that the complex E has cyclability.

(Example 18)

An aqueous solution of complex E at a concentration of 40 g/L was subjected to a cycle experiment by the same procedure as in Example 7. The results are shown in Figure 14 (d). Since the maximum temperatures in the process of the heat-generating by laser light irradiation and cooling cycle are 46.4°C ± 0.4°C, which indicates stable. Thus, it has been confirmed that the complex E has cyclability.

(Example 19)

An aqueous solution of complex E was prepared at a concentration of 40 g/L, and the absorbance thereof was measured using an optical cell of path length 1 cm. Subsequently, 1 g of this aqueous solution was added to an optical cell of path length 1 cm, and the aqueous solution in the cell was irradiated with a laser (manufactured by CivilLaser, 808 nm semiconductor laser, 808 nm, beam size: 5 × 5 mm, 0.69 W) for 30 minutes and was subsequently allowed to cool for 20 minutes. The temperature change of the complex E aqueous solution on this occasion was measured using a thermocouple (manufactured by Sato Keiryoki Mfg. Co., Ltd., SK-L400T) (Figure 15 (a)). One gram of distilled water was added to the optical cell and was irradiated with a laser for 30 minutes, and the temperature at that time was measured. Plots of $\ln(\theta)$ versus t were produced from the obtained data (Figure 15 (b)), and the photothermal conversion efficiency $\eta$ was determined by substituting the time constant calculated by the equation (2) into the equation (1). The photothermal conversion efficiency of complex E was 59%.

(Photothermal conversion efficiency $\eta$ of the complex C)

The thermoelectric conversion efficiency $\eta$ of the complex C was determined as in Example 15. The thermoelectric conversion efficiency $\eta$ of the complex C was 69%. The temperature change of the complex C aqueous solution at a concentration of 40 g/L is shown in Figure 16 (a), and plots of $\ln(\theta)$ versus t when the start of cooling was defined as t = 0 is shown in Figure 16 (b).

(Synthesis of polymer ligand)

a)

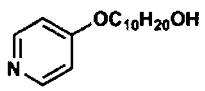

Py-OH

b)

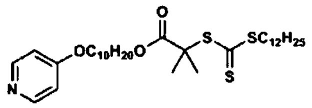

Py-CTA

c)

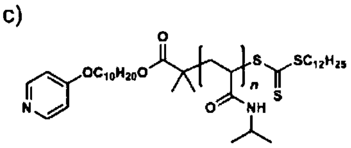

Py-PNIPAM (*n* = 95)

(Preparation Example 1)

Synthesis of Py-OH

10-Bromo-1-decanol (manufactured by Tokyo Chemical Industry Co., Ltd., 1.17 g, 4.93 mmol), 4-hydroxypyridine (manufactured by Tokyo Chemical Industry Co., Ltd., 940 mg, 9.88 mmol), and potassium carbonate (manufactured by FUJIFILM Wako Pure Chemical Corporation, special grade: 1.37 g, 9.93 mmol) were added to acetonitrile (manufactured by FUJIFILM Wako Pure Chemical Corporation, 100 mL), followed by heating and refluxing for 24 hours. The reaction mixture was filtered, and the obtained filtrate was dried under reduced pressure and then purified by silica gel chromatography to obtain a white solid of Py-OH (828 mg, yield: 67%).
$^1$H NMR (400 MHz, 298 K, acetone-d6): δ (ppm) 7.54 (d, J = 7.6 Hz, 2H), 6.07 (d, J = 7.6 Hz, 2H), 3.89 (t, J = 7.2 Hz, 2H), 3.50 (t, J = 6.1 Hz, 2H), 1.75-1.82 (m, 2H), 1.44-1.51 (m, 2H), 1.29-1.33 (m, 12H).

(Preparation Example 2)

Synthesis of Py-CTA

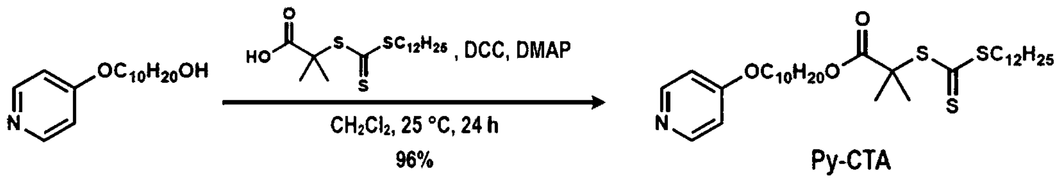


96%

Py-CTA

2-(Dodecylthiocarbonothioylthio)-2-methylpropionic acid (manufactured by Sigma-Aldrich, 949 mg, 2.60 mmol) and 4-dimethylaminopyridine (manufactured by Tokyo Chemical Industry Co., Ltd., 56.2 mg, 0.501 mmol) were dissolved in dichloromethane (manufactured by Kanto Chemical Co., Ltd., 5 mL). This solution was cooled to 0°C, and then a dichloromethane (manufactured by Kanto Chemical Co., Ltd., 5 mL) solution of Py-OH (503 mg, 2.00 mmol) and N,N'-dicyclohexylcarbodiimide (manufactured by FUJIFILM Wako Pure Chemical Corporation, special grade 1, 558 mg, 2.70 mmol) was dropwise added to the solution, followed by stirring at 25°C for 24 hours. The formed solid was removed by filtration, and the obtained filtrate was dried under reduced pressure and purified by silica gel chromatography to obtain a yellow liquid of Py-CTA (910 mg, yield: 76%).
$^1$H NMR (400 MHz, 298 K, acetone-d6): δ (ppm) 7.54 (d, J = 7.5 Hz, 2H), 6.09 (d, J = 7.6 Hz, 2H), 4.05 (t, J = 6.3 Hz, 2H), 3.90 (t, J = 7.2 Hz, 2H), 3.34 (t, J = 7.2 Hz, 2H), 1.56-1.83 (m, 12H), 1.28-1.45 (m, 30H), 0.88 (t, J = 7.0 Hz, 3H).

(Preparation Example 3)

Synthesis of Py-PNIPAM

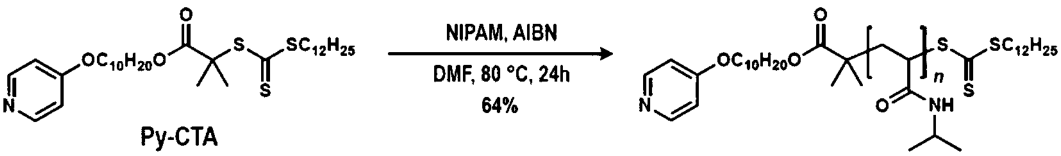


Py-CTA

$M_n$ = 11.0 kDa, $M_w$ = 13.9 kDa, PDI = 1.26

Py-PNIPAM ($n$ = 95)

$^1$H NMR spectrum (500 MHz, $CDCl_3$, 25 °C)

Py-CTA (60.8 mg, 0.102 mmol), azobisisobutyronitrile (manufactured by Tokyo Chemical Industry Co., Ltd., 0.33 mg, 0.0020 mmol), and N-isopropylacrylamide (manufactured by Tokyo Chemical Industry Co., Ltd., 1.66 g, 14.6 mmol) were added to N,N-dimethylformamide (manufactured by Kanto Chemical Co., Ltd., 2.8 mL). The obtained solution was freeze-deaerated, followed by stirring at 80°C for 24 hours. The reaction solution was cooled down to 25°C and was then added to diethyl ether cooled to -116°C. The formed solid was collected by filtration and vacuum-dried to obtain a light yellow solid of Py-PNIPAM (Mn = 11.0 kDa, Mw = 13.9 kDa, PDI = 1.26, 1.25 g, yield: 73%).
$^1$H NMR (500 MHz, 298K, $CDCl_3$): δ (ppm) 7.10-5.90 (br,89H), 4.00 (s, 96H), 1.93-2.38 (br, 253H), 1.73-1.93 (br, 59H), 1.50-1.73 (br, 95H), 1.23-1.50 (br, 72H), 0.95-1.23 (br, 577H), 0.88 (t, J = 6.9 Hz, 3H).

(Example 20)

Complex F $[Mn_{21}(\mu_4\text{-}O)_{10}(\mu_5\text{-}O)_4(L)_6(OAc)_6(Py\text{-}PNIPAM)_8]$

The complex A (10.0 mg, 0.00204 mmol) was dissolved in dichloromethane (manufactured by Kanto Chemical Co., Ltd., 10 mL), and Py-PNIPAM (179.2 mg, 0.0163 mmol) was added to the obtained solution, followed by stirring for 24 hours. The reaction mixture was filtered, and the obtained filtrate was added to diethyl ether of -90°C. The obtained sediment was collected by filtration and vacuum-dried to obtain a light yellow solid of complex F (138 mg, yield based on the complex A: 74%). The results of measurement of the FT-IR spectrum of complex F by the above-described IR measurement method are shown in Figure 17. Since the stretching vibration (1659 $cm^{-1}$) of carbonyl derived from DMF, which was observed in the FT-IR spectrum of the complex A, was not observed, it was confirmed that ligand exchange between the DMF and the Py-PNIPAM proceeded.

(Example 21)

Complex G (hydrogel) : hydrate of $[Mn_{21}(\mu_4\text{-}O)_{10}(\mu_5\text{-}O)_4(L)_6(OAc)_6(Py\text{-}PNTPAM)_8]$

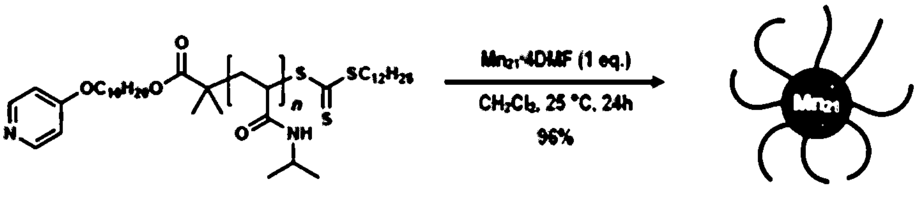


Py-PNIPAM (8 eq.)

$Mn_{21}(Py\text{-}PNIPAM)_8$

LCST of $Mn_{21}(Py\text{-}PNIPAM)_8$ and Py-PNIPAM as measured by UV-Vis spectroscopy at 600 nm in water

The complex A (4.09 mg, 0.000833 mmol) was added to a dichloromethane (manufactured by Kanto Chemical Co., Ltd., 5 mL) solution of Py-CTA (3.99 mg, 0.00667 mmol), followed by stirring for 30 minutes. The obtained reaction mixture was filtered, and the obtained filtrate was dried under reduced pressure, and azobisisobutyronitrile (manufactured by Tokyo Chemical Industry Co., Ltd., 1.10 mg, 0.00667 mmol), **N**-isopropylacrylamide (manufactured by Tokyo Chemical Industry Co., Ltd., 150.9 mg, 1.33 mmol), N,N'-methylenebis(acrylamide) (manufactured by Tokyo Chemical Industry Co., Ltd., 8.22 mg, 0.0533 mmol), and N,N-dimethylformamide (manufactured by Kanto Chemical Co., Ltd., 1 mL) were then added thereto. The obtained solution was deaerated by blowing a nitrogen gas for 15 minutes and was then left to stand at 60°C for 24 hours. The reaction mixture was cooled to room temperature, then washed with N,N-dimethylformamide, and dried under reduced pressure. The obtained black solid was immersed in water for 3 days to obtain complex G (hydrogel). The complex G (hydrogel) was dried, and the FT-IR spectrum was measured by the above-described IR measurement method. The results are shown in Figure 18.

(Example 22)

(Measurement of temperature-dependent transmittance of complex F aqueous solution)

An aqueous solution of complex F was prepared at a concentration of 5 g/L. The transmittance at a wavelength of 600 nm when the aqueous solution was heated and cooled in a range of from 20°C to 35°C was measured with a UV visible near-infrared spectrophotometer. The results are shown in Figure 19. In the temperature increasing process, the transmittance of the complex F aqueous solution dropped sharply at around 27°C. This is resulted from aggregation caused by dehydration by the lower critical solution temperature (LCST) behavior of the Py-PNIPAM chain included in the complex F. In the temperature decreasing process, the transmittance of the complex F aqueous solution sharply increased at around 25°C. This is resulted from dispersion caused by hydration of the Py-PNIPAM chain included in the complex F. This behavior was reversible even in repeating measurement.

(Example 23)

(Evaluation of photothermal conversion characteristic of aqueous solution)

An aqueous solution having a concentration of 20 g/L of the complex F was prepared. The aqueous solution was added to a microtube having a diameter of 4.4 mm up to a height of 1 cm. This microtube was irradiated with a laser (manufactured by CivilLaser, 808 nm semiconductor laser, 808 nm, beam size: 5 × 5 mm, 1 W) for 1.5 minutes to generate heat and then allowed to cool for 5 minutes. The state of the complex F aqueous solution on this occasion was photographed. In addition, the temperature change of the aqueous solution was measured with an infrared camera (manufactured by FLIR, E50). The results are shown in Figure 20. The temperature of the complex F aqueous solution was increased by laser light irradiation, and an increase in the turbidity resulting from the LSCT behavior of the Py-PNIPAM chain included in the complex F was observed. The temperature of the complex F aqueous solution decreased by stopping the laser irradiation, and the solution returned to transparent by hydrating again the Py-PNIPAM chain included in the complex F. This behavior was observed repeatedly and was thus reversible.

(Example 24)

(Volume change by laser irradiation)

The complex G (hydrogel) immersed in water was irradiated with a laser (manufactured by CivilLaser, 808 nm semiconductor laser, 808 nm, beam size: 5 × 5 mm, 1 W) and then allowed to cool, and the volume change on this occasion was observed. The results are shown in Figure 21. The laser light irradiation induced LSCT-type phase transition in the hydrogel, and as a result, the volume of the hydrogel decreased. The volume of the hydrogel slowly returned to the initial volume by stopping the laser irradiation. This behavior was observed repeatedly and was thus reversible.

(Example 25)

(Rheology measurement)

The storage elastic modulus and the loss elastic modulus when the complex G (hydrogel) was cooled and heated in a range of from 20°C to 45°C were measured. The results are shown in Figure 20. In the temperature decreasing process, the elastic moduli of the complex G (hydrogel) decreased at around 35°C to 30°C. In the temperature increasing process, the elastic moduli of the complex G (hydrogel) increased at around 35°C to 40°C. These changes in the elastic moduli are resulting from dehydration or hydration by the lower critical solution temperature (LCST) behavior of the Py-PNIPAM chain included in the complex G (hydrogel).

The complex G (hydrogel) was repeatedly irradiated with a laser (manufactured by CivilLaser, 808 nm semiconductor laser, 808 nm, beam size: 5 × 5 mm, 1.5 W and 1 W) for 1 minute and allowed to cool for 1 minute, and the change in the elastic modulus of the hydrogel was measured. The results are shown in Figure 22. The elastic modulus of the hydrogel increased by laser light irradiation, and the elastic modulus of the hydrogel decreased by stopping the laser light irradiation and allowing to cool. This behavior was observed repeatedly and was thus reversible. The elastic modulus of the hydrogel further increased by increasing the strength of the laser (Figure 23).

## Claims

1. A manganese oxide cluster compound of the following formula (1):

$$[Mn_{21}(\mu_4\text{-}O)_{10}(\mu_5\text{-}O)_4(L)_6(\alpha^1)_6(\beta^1)_{8\text{-}q}(P^1)_q]m\cdot\gamma^1 \qquad (1)$$

wherein

L is a tricarboxytriptycene residue;
$\alpha^1$ is an organic acid residue;
$\beta^1$ is a solvent selected from the group consisting of water and a polar organic solvent having a dielectric constant of from 6 to 47;
$P^1$ is a coordination molecule selected from the group consisting of a nitrogen-containing heterocyclic compound, an oxygen-containing cyclic compound, and phosphines, or a polymer containing the coordination molecule;
$\gamma^1$ is a solvent selected from the group consisting of water and a polar organic solvent having a dielectric constant of from 6 to 47;
q is a number satisfying $0 \leq m \leq 8$; and
m is a number satisfying $0 \leq m \leq 10$.

2. The compound according to claim 1, wherein $\alpha^1$ is an alkanoyloxy group having from 2 to 6 carbon atoms.

3. The compound according to claim 1 or 2, wherein $\beta^1$ is one or more selected from the group consisting of water, esters, ethers, glycols, glycerol, ketones, alcohols, dimethylformamide, dimethylacetamide, dimethyl sulfoxide, pyridine, and acetonitrile.

4. The compound according to any one of claims 1 to 3, wherein $\gamma^1$ is one or more selected from the group consisting of water, esters, ethers, glycols, glycerol, ketones, alcohols, dimethylformamide, dimethylacetamide, dimethyl sulfoxide, pyridine, and acetonitrile.

5. The compound according to any one of claims 1 to 4, wherein $P^1$ is a coordination molecule selected from the group consisting of pyridine, imidazole, pyrazole, pyrazine, pyrimidine, triazine, bipyridine, a trisubstituted phosphine, and tetrahydrofuran, or a compound in which a polymer is bonded to the coordination molecule.

6. A manganese oxide cluster compound of the following formula (2):

$$[Mn_{17}(\mu_3\text{-}O)_2(\mu_4\text{-}O)_4(\mu_5\text{-}O)_6(\mu_3\text{-}OH)_2(L')_6(\alpha^2)_6(\beta^2)_{6\text{-}r}(P^2)r]n\cdot\gamma^2 \qquad (2)$$

wherein

L' is a dicarboxytriptycene residue;
$\alpha^2$ is an organic acid residue;
$\beta^2$ is a solvent selected from the group consisting of water and a polar organic solvent having a dielectric constant of from 6 to 47;
$P^2$ is a coordination molecule selected from the group consisting of a nitrogen-containing heterocyclic compound, an oxygen-containing cyclic compound, and phosphines, or a polymer containing the coordination molecule;
$\gamma^2$ is a solvent selected from the group consisting of water and a polar organic solvent having a dielectric constant of from 6 to 47;
r is a number satisfying $0 \leq m \leq 6$; and
n is a number satisfying $0 \leq n \leq 10$.

7. The compound according to claim 6, wherein $\alpha^2$ is an alkanoyloxy group having from 2 to 6 carbon atoms.

8. The compound according to claim 6 or 7, wherein $\beta^2$ is one or more selected from the group consisting of water, esters, ethers, glycols, glycerol, ketones, alcohols, dimethylformamide, dimethylacetamide, dimethyl sulfoxide, pyridine, and acetonitrile.

9. The compound according to any or of claims 6 to 8, wherein $P^2$ is a coordination molecule selected from the group consisting of pyridine, imidazole, pyrazole, pyrazine, pyrimidine, triazine, bipyridine, a trisubstituted phosphine, and

tetrahydrofuran, or a compound in which a polymer is bonded to the coordination molecule.

**10.** The compound according to any one of claims 6 to 9, wherein $\gamma^2$ is one or more selected from the group consisting of water, esters, ethers, glycols, glycerol, ketones, alcohols, dimethylformamide, dimethylacetamide, dimethyl sulfoxide, pyridine, and acetonitrile.

**11.** A photoexothermic material composition comprising the compound according to any one of claims 1 to 10.

**12.** A heat-generating method comprising irradiating a composition containing the compound according to any one of claims 1 to 10 with light.

Fig. 1

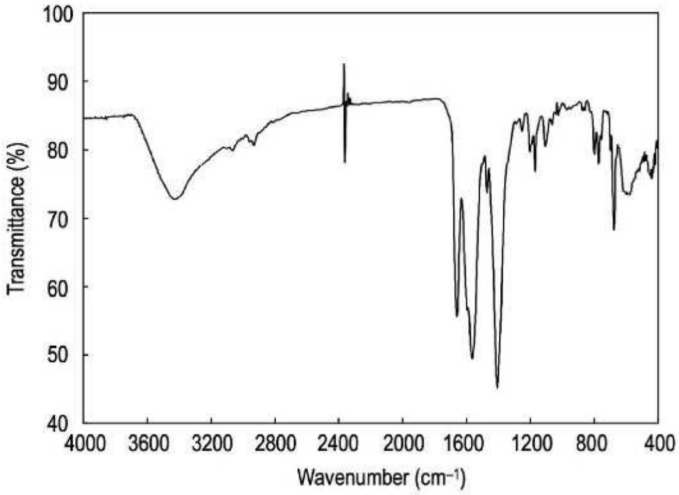
Transmittance (%)
Wavenumber (cm⁻¹)
100
90
80
70
60
50
40
4000
3600
3200
2800
2400
2000
1600
1200
800
400

Fig. 2

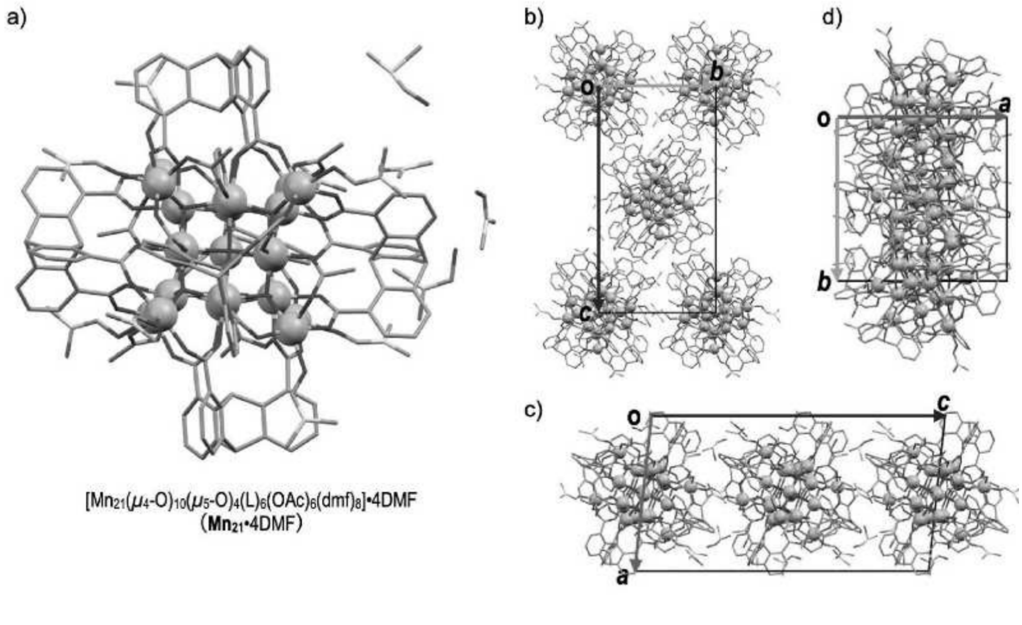
a)
b)
c)
d)
o
a
b
c
$[Mn_{21}(\mu_4\text{-}O)_{10}(\mu_5\text{-}O)_4(L)_6(OAc)_6(dmf)_8]\cdot 4DMF$
($\mathbf{Mn_{21}}\cdot 4DMF$)

Fig. 3

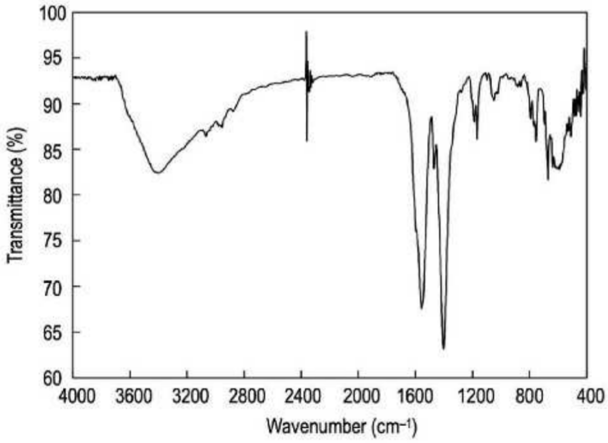
Transmittance (%)
100
95
90
85
80
75
70
65
60
4000
3600
3200
2800
2400
2000
1600
1200
800
400
Wavenumber (cm⁻¹)

Fig. 4

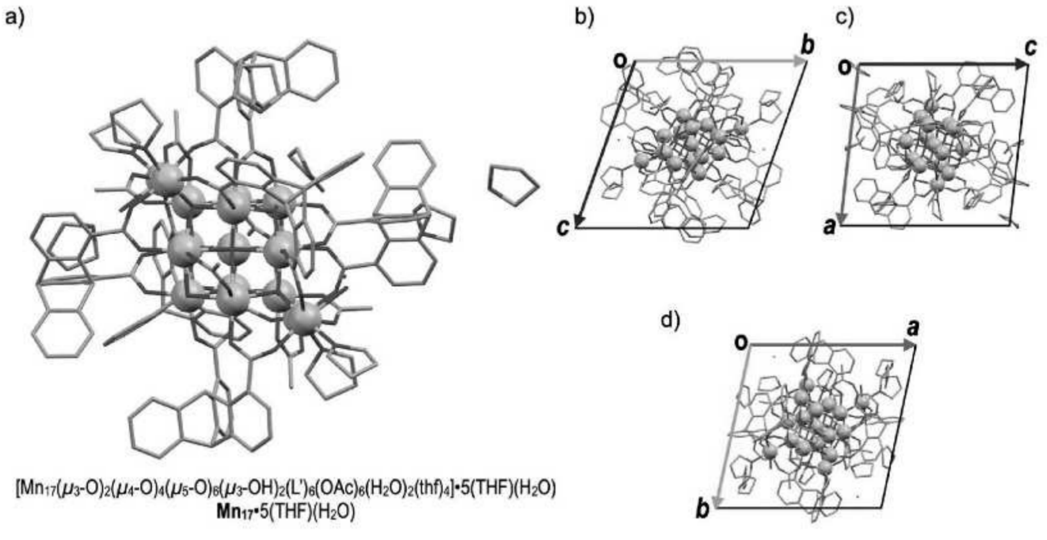
a)
b)
c)
d)
o
b
c
a
$[Mn_{17}(\mu_3\text{-}O)_2(\mu_4\text{-}O)_4(\mu_5\text{-}O)_6(\mu_3\text{-}OH)_2(L')_6(OAc)_6(H_2O)_2(thf)_4]\bullet 5(THF)(H_2O)$
$\mathbf{Mn_{17}}\bullet 5(THF)(H_2O)$

Fig. 5

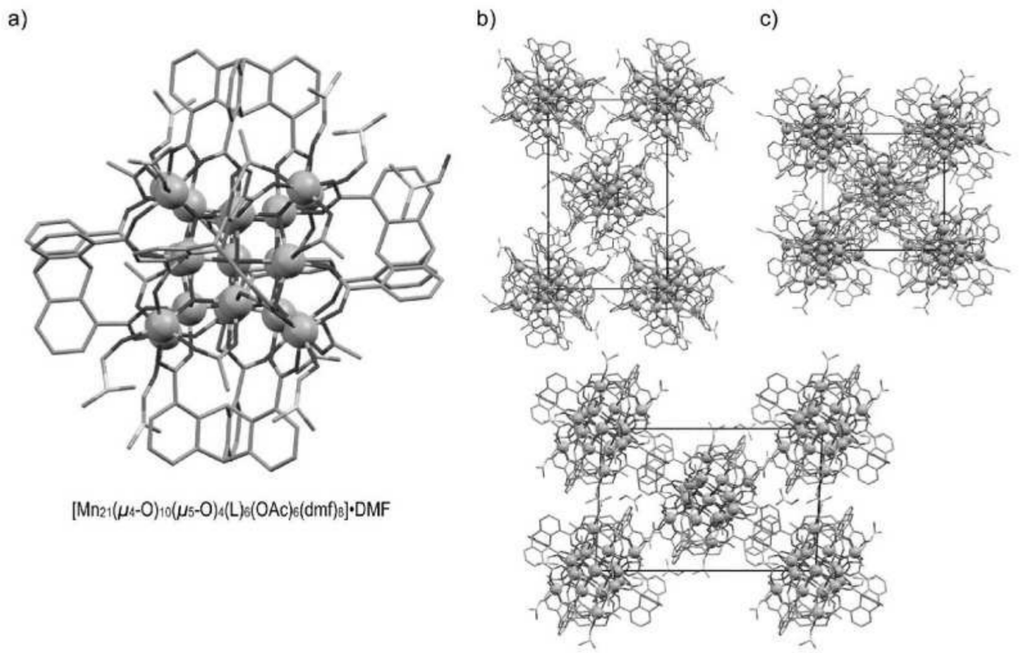

Fig. 6

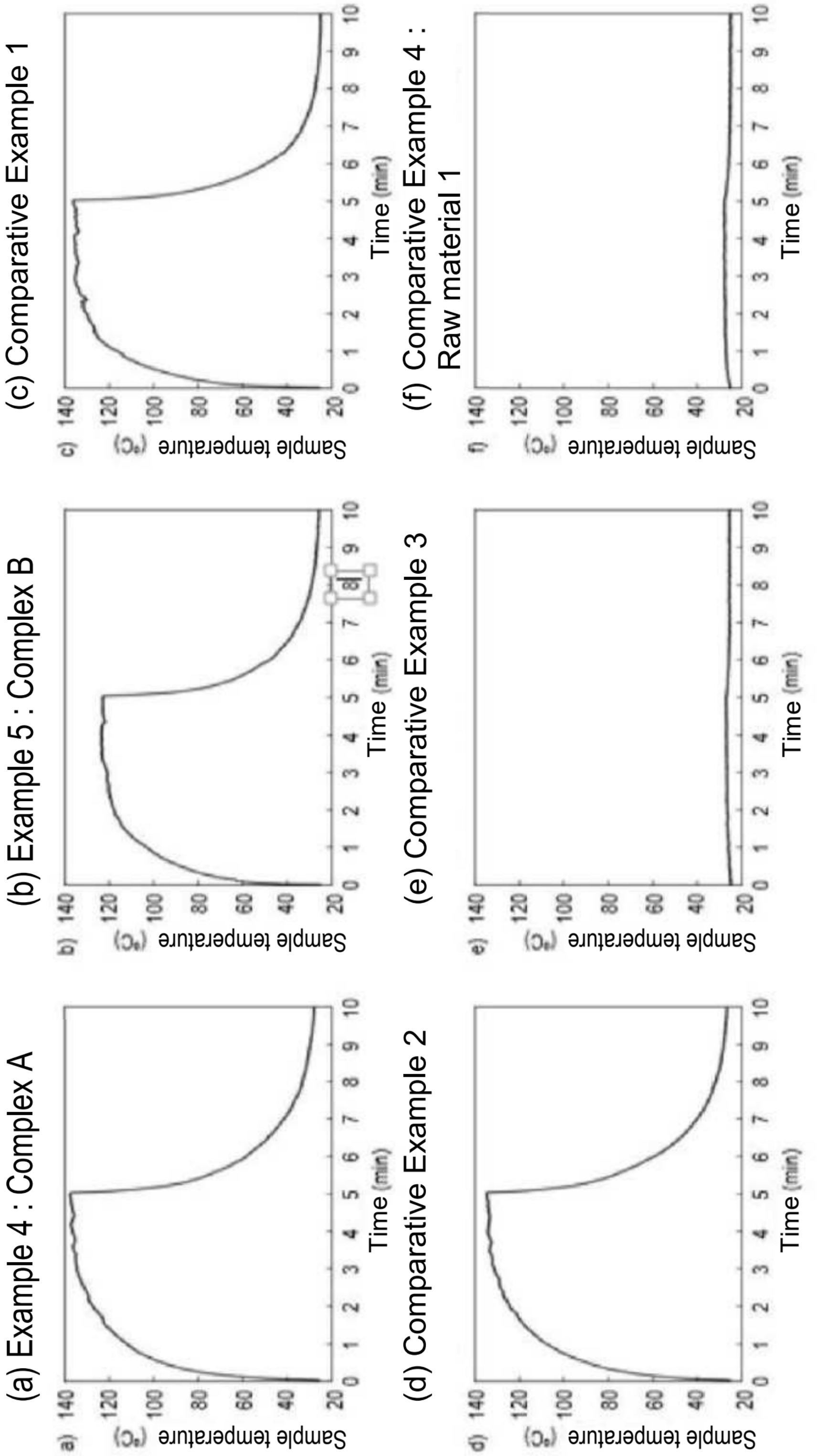


Temperature changes of the samples: a) complex A, b) complex B, c) single-layer carbon nanotube, d) manganese(IV) oxide, e) manganese(II) acetate tetrahydrate, and f) raw material 1 when each of the samples was subjected to laser irradiation for 5 minutes and cooling for 5 minutes.

Fig. 7

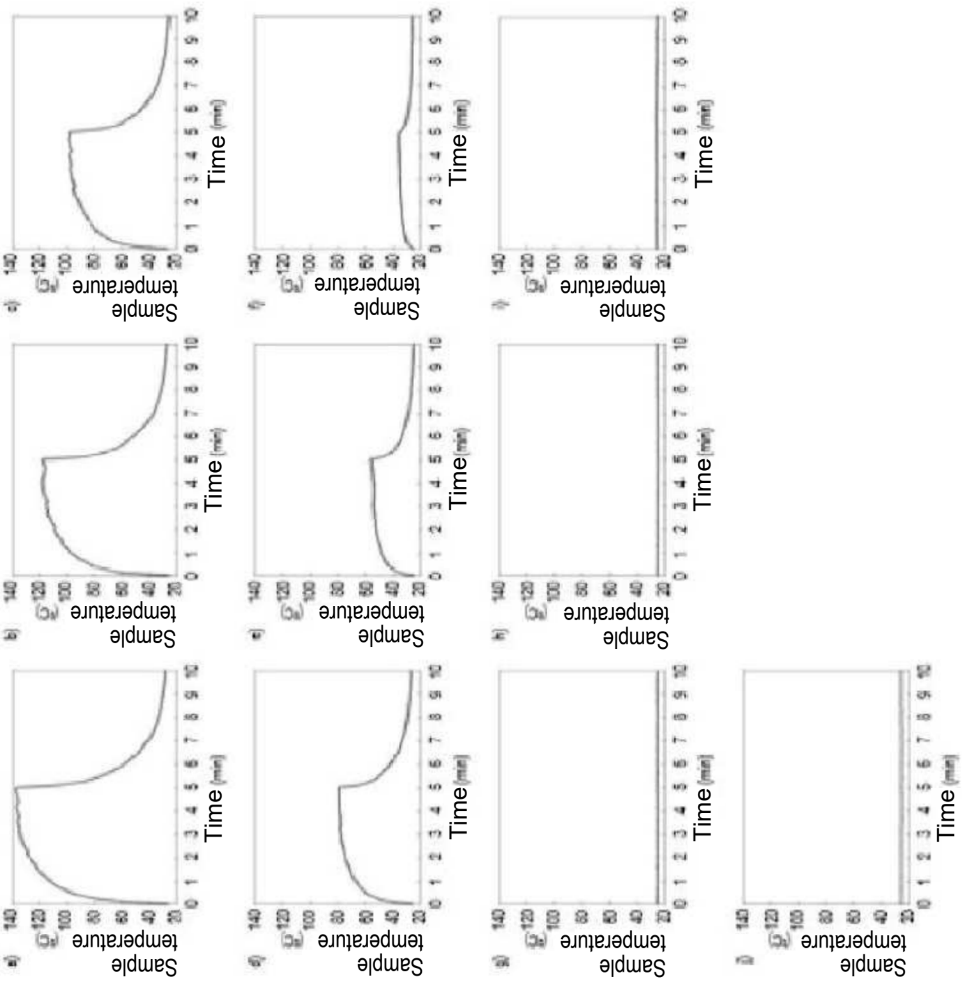


Temperature changes of complex A under laser powers of a) 1 W, b) 900 mW, c) 800 mW, d) 700 mW, e) 600 mW, f) 500 mW, g) 400 mW, h) 300 mW, i) 200 mW, and j) 100 mW.

Fig. 8

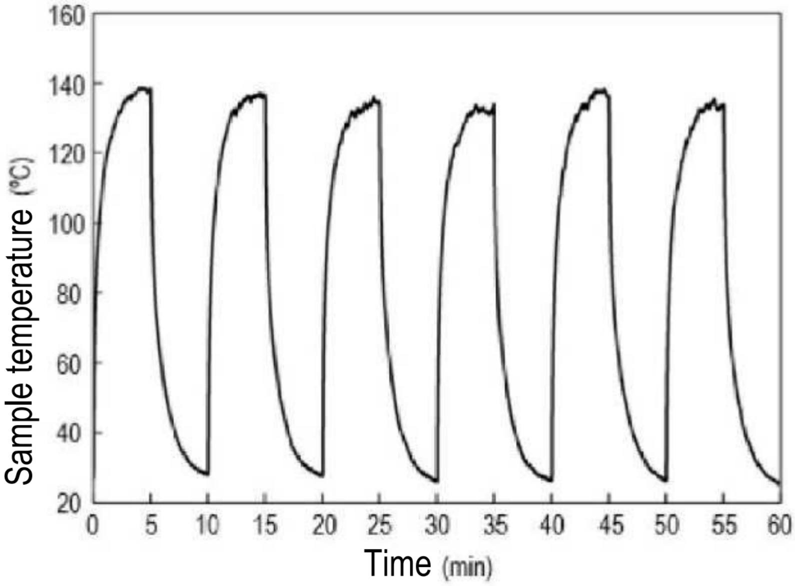
Sample temperature (°C)
Time (min)
160
140
120
100
80
60
40
20
0
5
10
15
20
25
30
35
40
45
50
55
60

Fig. 9

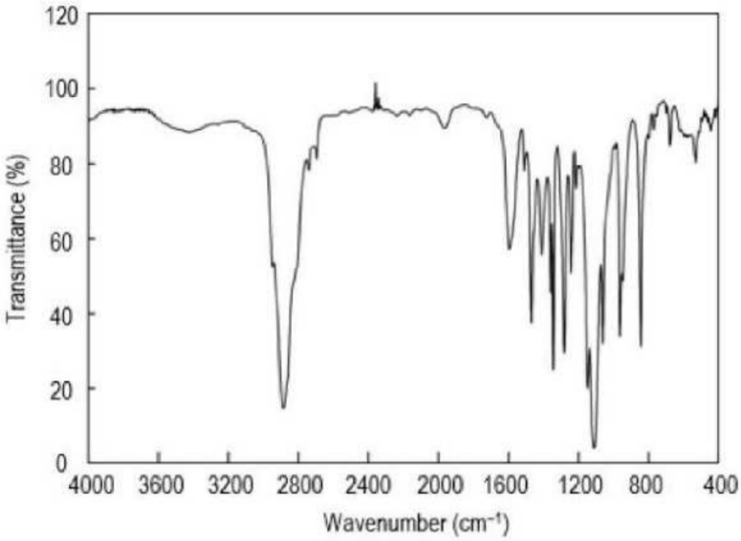
Transmittance (%)
Wavenumber (cm⁻¹)
120
100
80
60
40
20
0
4000
3600
3200
2800
2400
2000
1600
1200
800
400

Fig. 10

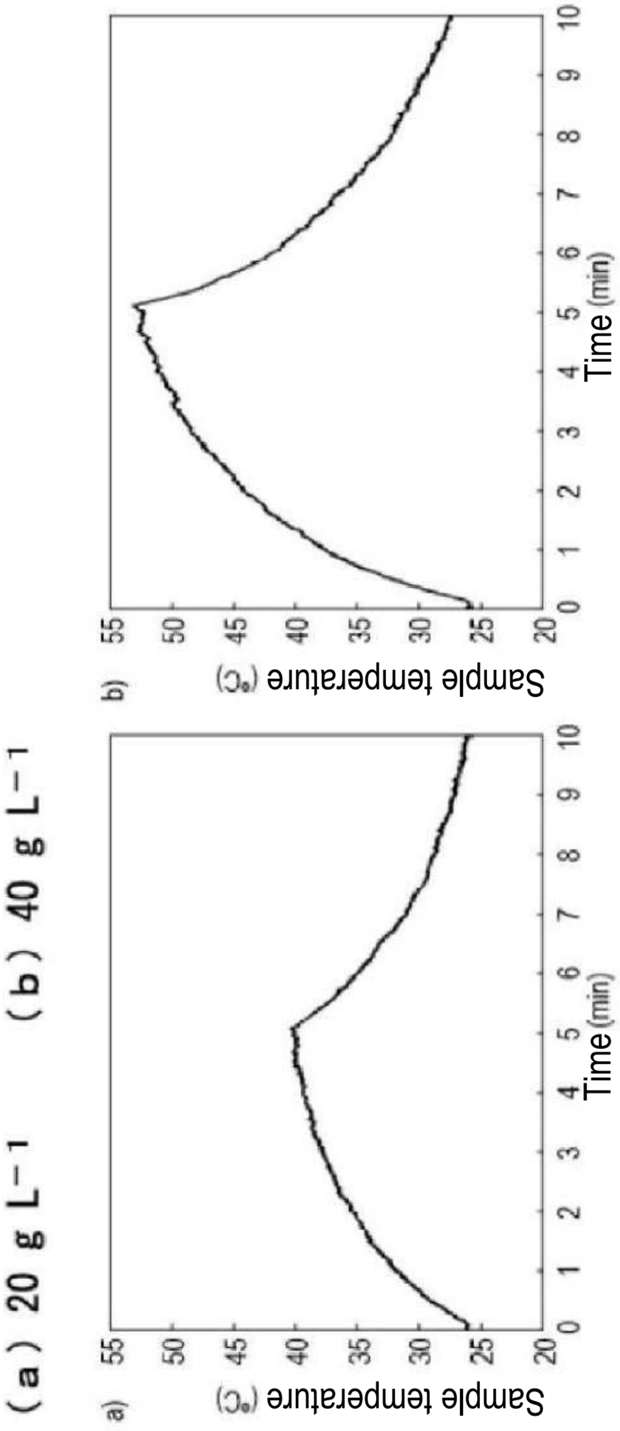

Fig. 11

(a) 20 g $L^{-1}$ (b) 40 g $L^{-1}$

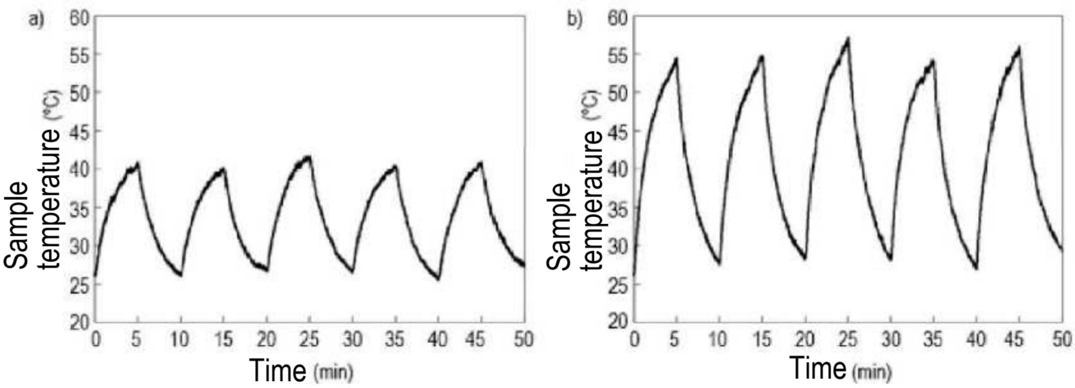


Fig. 12

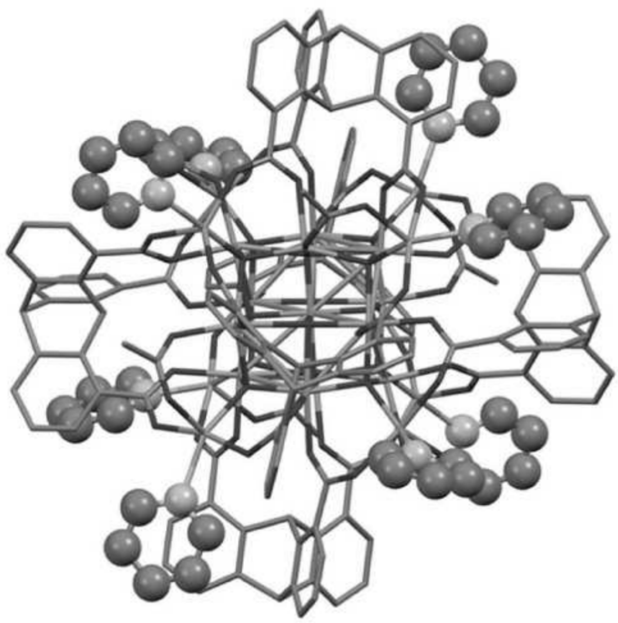

Fig. 13

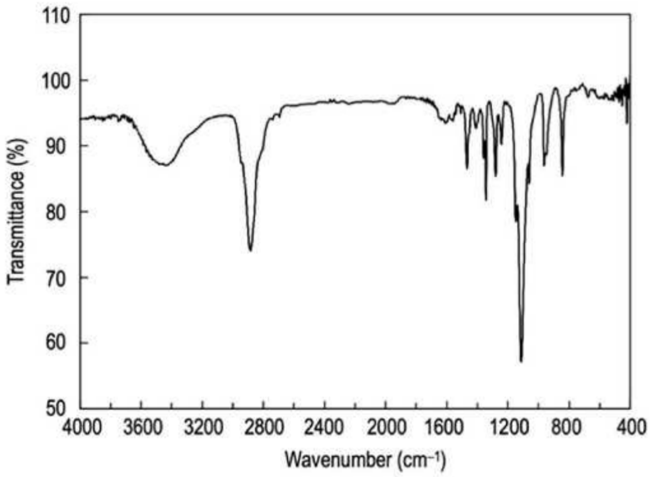
110
100
90
80
70
60
50
Transmittance (%)
4000
3600
3200
2800
2400
2000
1600
1200
800
400
Wavenumber (cm⁻¹)

Fig. 14

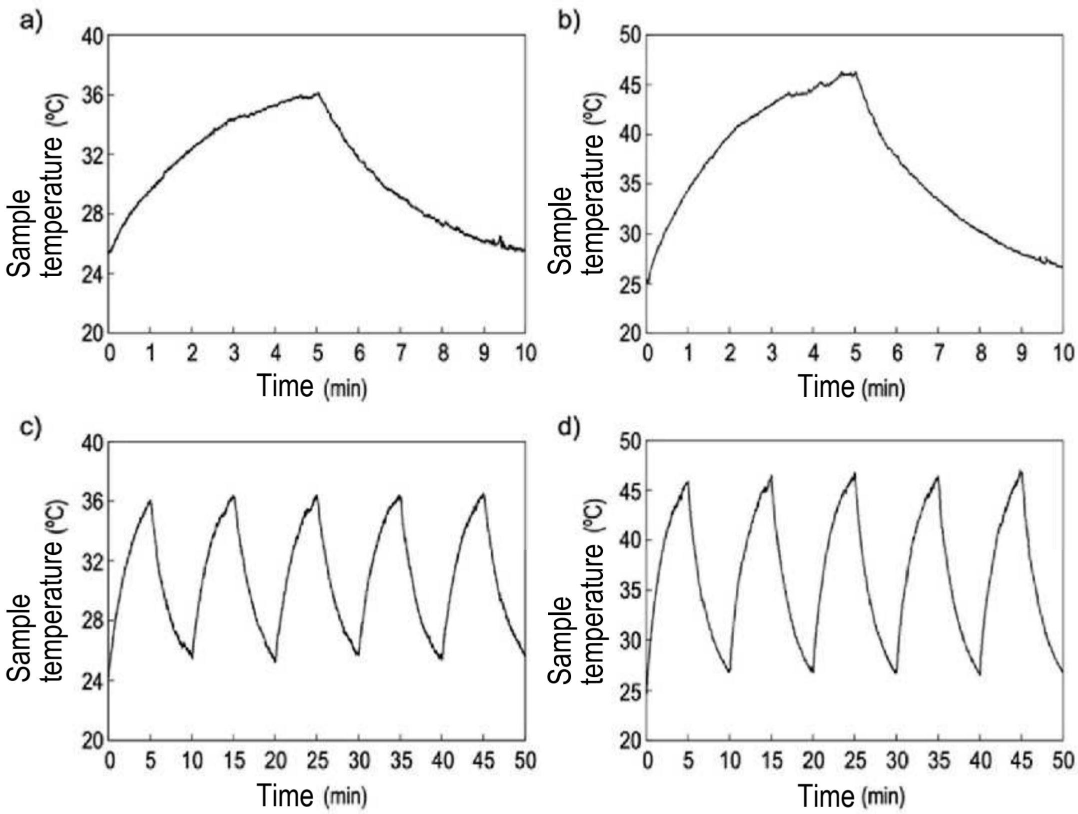
a)
b)
c)
d)
Sample temperature (°C)
Time (min)

Fig. 15

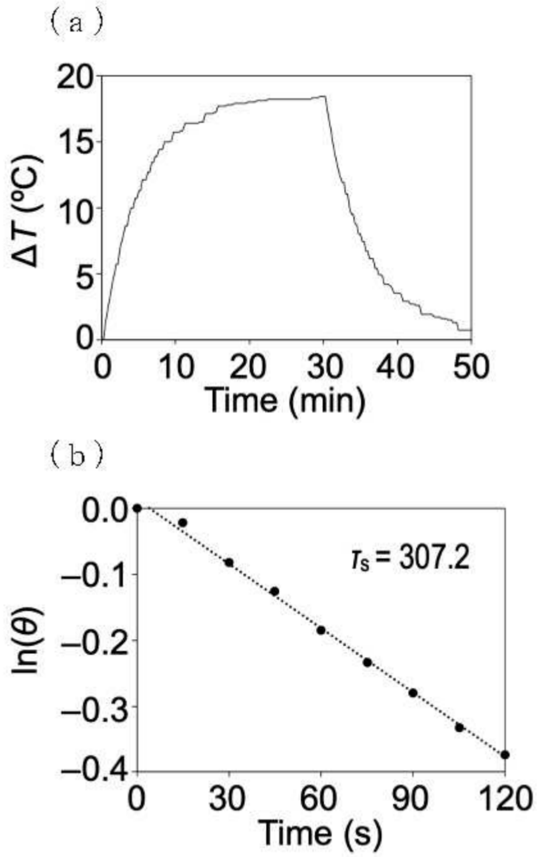
(a)
20
15
10
5
0
ΔT (ºC)
0 10 20 30 40 50
Time (min)
(b)
0.0
–0.1
–0.2
–0.3
–0.4
ln(θ)
τs = 307.2
0 30 60 90 120
Time (s)

Fig. 16

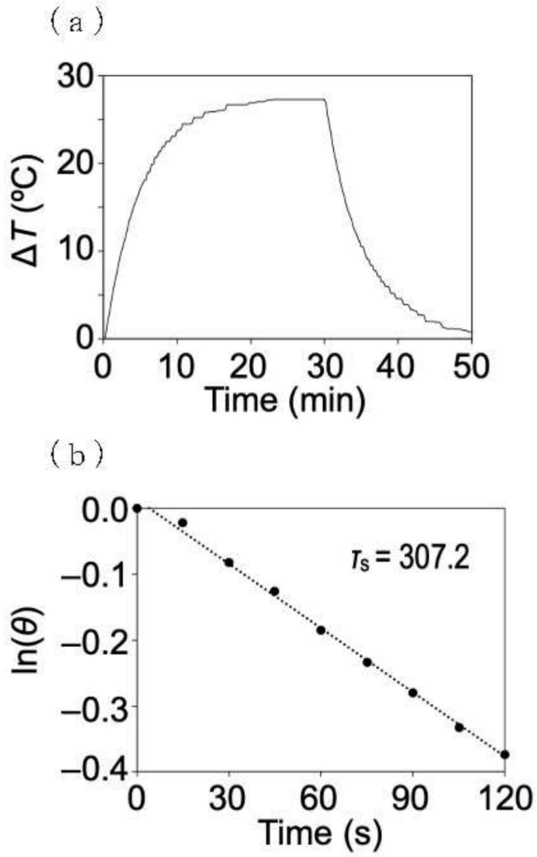
(a)
30
20
10
0
ΔT (ºC)
0 10 20 30 40 50
Time (min)
(b)
0.0
–0.1
–0.2
–0.3
–0.4
ln(θ)
τs = 307.2
0 30 60 90 120
Time (s)

Fig. 17

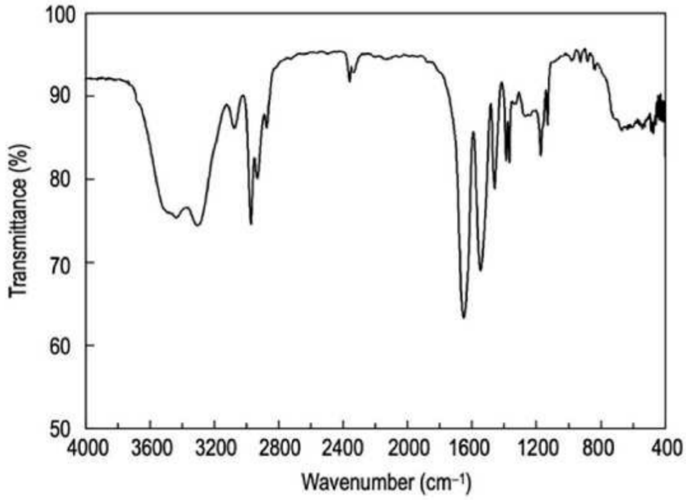
100
90
80
70
60
50
Transmittance (%)
4000
3600
3200
2800
2400
2000
1600
1200
800
400
Wavenumber (cm⁻¹)

Fig. 18

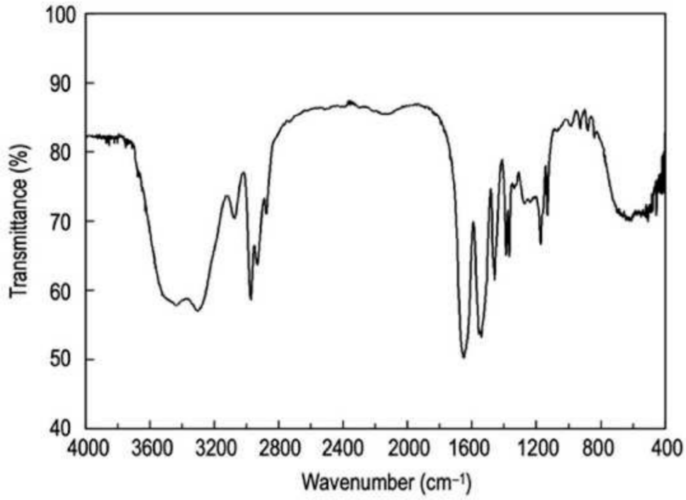
100
90
80
70
60
50
40
Transmittance (%)
4000
3600
3200
2800
2400
2000
1600
1200
800
400
Wavenumber (cm⁻¹)

Fig. 19

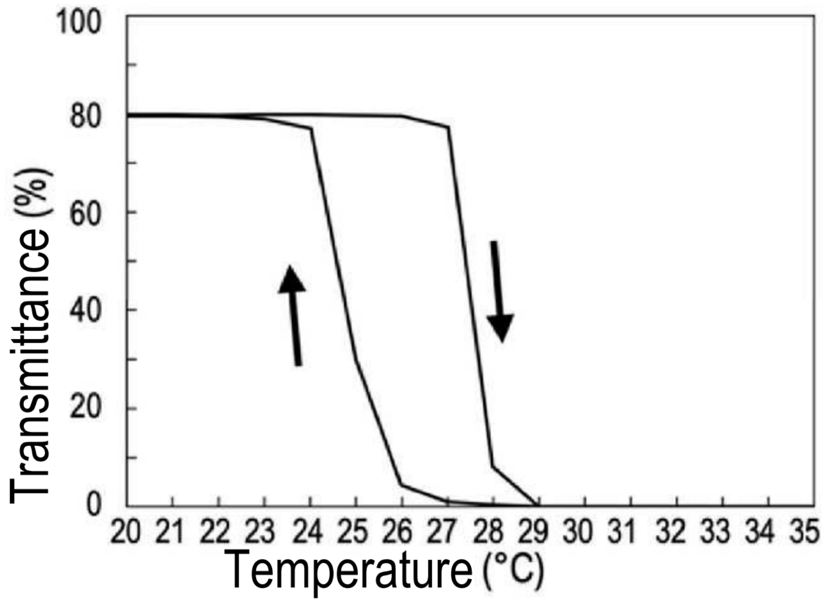
Transmittance (%)
100
80
60
40
20
0
20 21 22 23 24 25 26 27 28 29 30 31 32 33 34 35
Temperature (°C)

Fig. 20

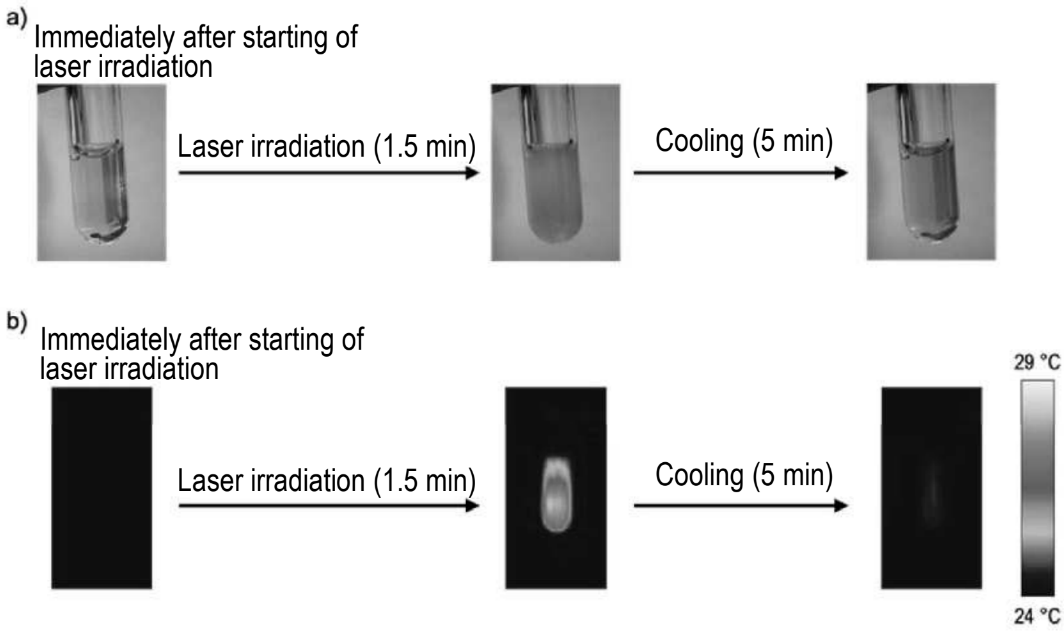
a)
Immediately after starting of laser irradiation
Laser irradiation (1.5 min)
Cooling (5 min)
b)
Immediately after starting of laser irradiation
Laser irradiation (1.5 min)
Cooling (5 min)
29 °C
24 °C

Fig. 21

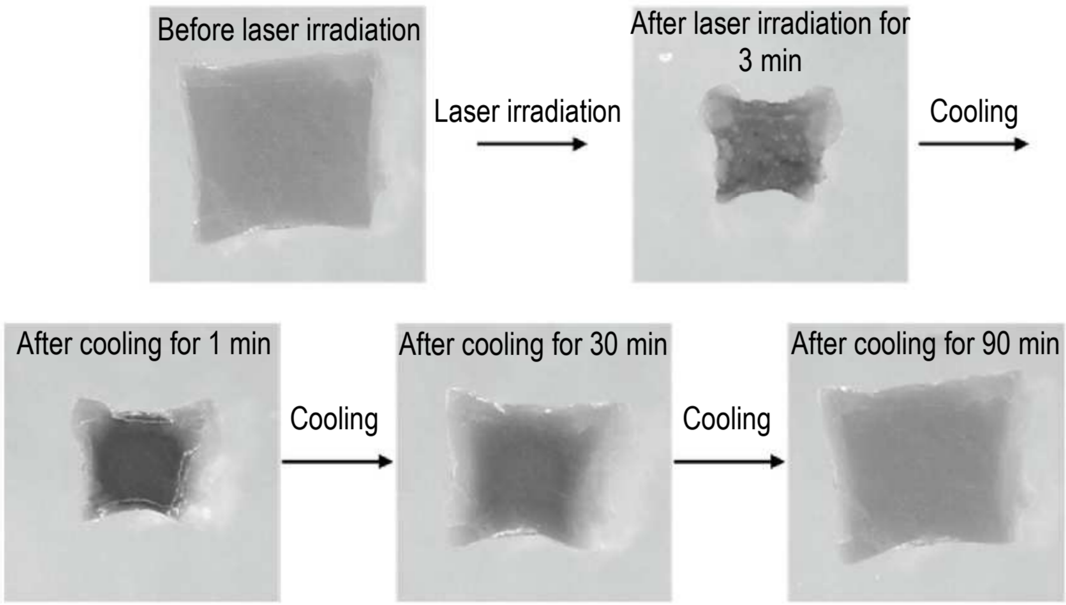
Before laser irradiation
Laser irradiation
After laser irradiation for 3 min
Cooling
After cooling for 1 min
Cooling
After cooling for 30 min
Cooling
After cooling for 90 min

Fig. 22

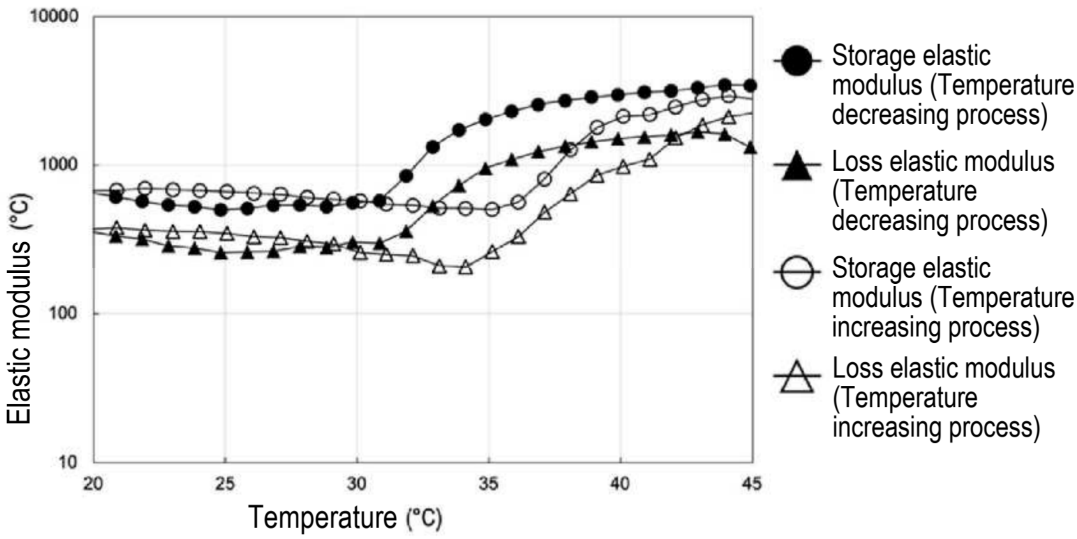
10000
1000
100
10
Elastic modulus (°C)
20
25
30
35
40
45
Temperature (°C)
Storage elastic modulus (Temperature decreasing process)
Loss elastic modulus (Temperature decreasing process)
Storage elastic modulus (Temperature increasing process)
Loss elastic modulus (Temperature increasing process)

Fig. 23

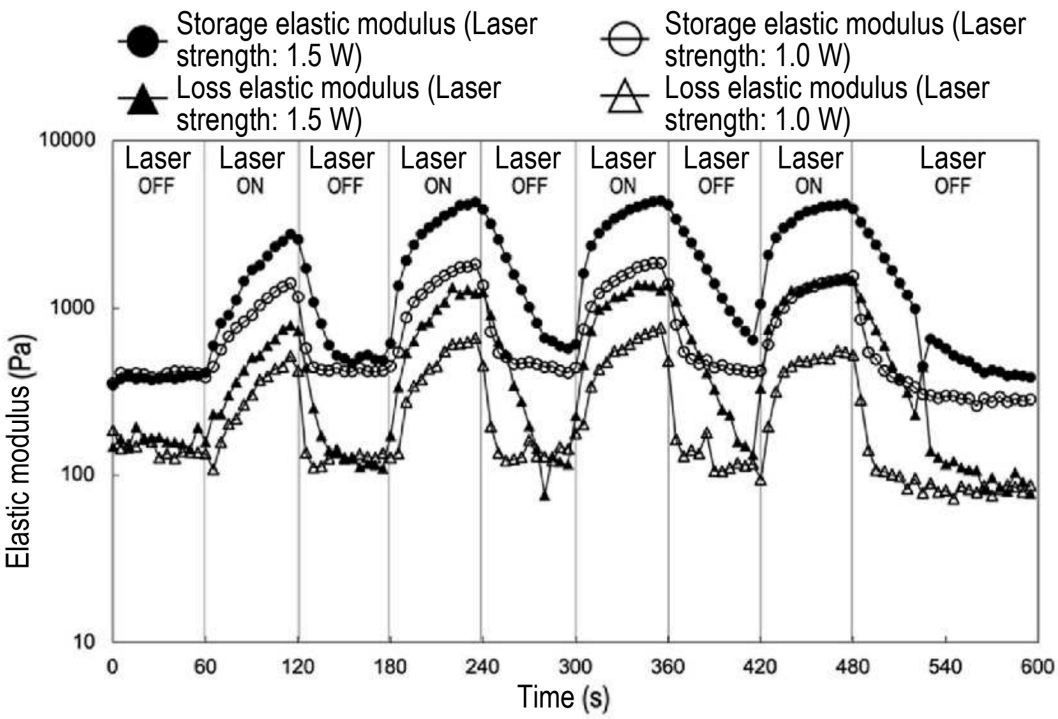
Storage elastic modulus (Laser strength: 1.5 W)
Storage elastic modulus (Laser strength: 1.0 W)
Loss elastic modulus (Laser strength: 1.5 W)
Loss elastic modulus (Laser strength: 1.0 W)
Laser OFF
Laser ON
Laser OFF
Laser ON
Laser OFF
Laser ON
Laser OFF
Laser ON
Laser OFF
Elastic modulus (Pa)
10000
1000
100
10
0
60
120
180
240
300
360
420
480
540
600
Time (s)

**INTERNATIONAL SEARCH REPORT**

International application No.
**PCT/JP2024/011116**

**A. CLASSIFICATION OF SUBJECT MATTER**

***C07F 13/00***(2006.01)i; ***C07C 63/49***(2006.01)i; ***C08G 65/325***(2006.01)i; ***C09K 5/14***(2006.01)i
FI: C07F13/00 A CSP; C07C63/49; C08G65/325; C09K5/14 Z

According to International Patent Classification (IPC) or to both national classification and IPC

**B. FIELDS SEARCHED**

Minimum documentation searched (classification system followed by classification symbols)

C07F13/00; C07C63/49; C08G65/325; C09K5/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | Chem. Eur. J., 2010, 16, pp. 12865-12872, DOI: 10.1002/chem.201001988<br>entire text | 1-12 |
| A | Eur. J. Inorg. Chem., 2011, pp. 4325-4330, DOI: 10.1002/ejic.201100781<br>entire text | 1-12 |
| A | POLYHEDRON, 2003, 22, pp. 2267-2271, DOI: 10.1016/S0277-5387(03)00204-3<br>entire text | 1-12 |
| A | Angew. Chem. Int. Ed., 2002, 41, no. 14, pp. 2506-2508<br>entire text | 1-12 |
| A | Inorg. Chem., 2004, 43, pp. 4137-4144, DOI: 10.1021/ic0353864<br>entire text | 1-12 |
| A | Inorg. Chem., 2022, 61, pp. 16038-16044, DOI: 10.1021/acs.inorgchem.2c02441<br>entire text | 1-12 |

☐ Further documents are listed in the continuation of Box C. ☐ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 May 2024** | **21 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **NADINE WONG SHI KAM** ; **MICHAEL O'CONNELL** ; **JEFFREY A. WISDOM** ; **HONGJIE DAI**. *Proc. Natl. Acad. Sci. USA*, 2005, vol. 102, 11600
- **D.K. ROPER et al.** *J. Phys. Chem. C*, 2007, vol. 111, 3636
- **ZENG et al.** *Adv. Healthcare Mater.*, 2016, vol. 5, 772
- **S. DAS et al.** *ACS Nano.*, 2021, vol. 15, 11168-11179
- **S. ACEVEDO et al.** *J. Chem. Soc., Perkin Trans.*, 1986, vol. 2, 2051-2054
- **M.E. ROBINSON et al.** *ACS Nano.*, 2017, vol. 11, 9162-9175